(19) Europäisches Patentamt
European Patent Office
Office européen des brevets

(11) EP 1 582 565 B1

(12) **EUROPEAN PATENT SPECIFICATION**

(45) Date of publication and mention of the grant of the patent:
**11.07.2007 Bulletin 2007/28**

(51) Int Cl.:
***C09B 5/14*** *(2006.01)* ***C08K 5/3432*** *(2006.01)*
***B29C 65/16*** *(2006.01)*

(21) Application number: **04017682.8**

(22) Date of filing: **26.07.2004**

(54) **Laser ray transmitting colored thermoplastic resin composition and method of laser welding**

Für Laserstrahlung durchlässige gefärbte thermoplastische Harzzusammensetzung und Methode des Laserschweissens

Composition de résine thermoplastique colorée transmettant un faisceau laser et procédé de soudage par faisceau laser

(84) Designated Contracting States:
**CH DE FR GB IT LI**

(30) Priority: **30.03.2004 JP 2004098119**

(43) Date of publication of application:
**05.10.2005 Bulletin 2005/40**

(73) Proprietor: **ORIENT CHEMICAL INDUSTRIES, LTD.**
**Osaka-shi, Osaka (JP)**

(72) Inventors:
- **Sugawara, Shuji**
**Neyagawa-shi**
**Osaka (JP)**
- **Hatase, Yoshiteru**
**Neyagawa-shi**
**Osaka (JP)**

(74) Representative: **Liedl, Christine et al**
**c/o Hansmann & Vogeser,**
**Albert-Rosshaupter-Strasse 65**
**81369 München (DE)**

(56) References cited:
**EP-A- 0 270 306**
**EP-A- 1 029 650**
**WO-A-01/44357**
**WO-A-01/58997**
**WO-A-20/04067619**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 582 565 B1

## Description

The present invention relates to a laser ray transmitting colored thermoplastic resin composition containing an anthrapyridone acid dye and a method of laser welding using the laser ray transmitting colored thermoplastic resin composition.

Laser welding of synthetic resin materials can, for example, be conducted as described below. As shown in Figure 1, one member incorporating a laser ray transmitting material and another member incorporating a laser-absorbing material are brought into contact with each other. When irradiating laser ray from the laser ray transmitting material side to the laser absorbent material, the laser ray that has transmitted the laser ray transmitting material is absorbed in the laser absorbent material and generates heat. By this heat, the laser absorbent material is molten around the portion that has absorbed the laser ray, and the laser ray transmitting material is also molten, the resins of the two members fuse together, and upon cooling sufficient welding strength is obtained and the laser ray transmitting material and the laser absorbent material are joined firmly. Features of laser welding include the capability of welding without bringing the laser generation portion in contact with the portion to be welded, the minimal thermal effect on the surrounding portion because the heating is localized, freedom from the problem of mechanical vibration, the capability of welding of fine portions and structures, high reproducibility, maintenance of high air-tightness, high welding strength, inconspicuous welded portion, and no generation of dust etc.

Traditionally, resin parts have been joined together by clamping with clamping parts (bolts, screws, clips, etc.), adhesion using adhesives, vibration welding, ultrasonic welding, etc. According to laser welding, labor saving, productivity improvements, production cost reductions, etc. can be achieved because secure welding is achieved by simple operation to provide strength equivalent to or more than expected by conventional method and in addition vibration and heat have minimal effects. With these features, laser welding is suitable for the joining of functional components, electronic components, etc., for which the avoidance of the influence of vibration or heat is desired in, for example, automobile industry, electric/electronic industry and other fields, and is applicable to the joining of resin parts of complex shapes. As a technology concerning laser welding, Patent Document 1 describes a method of laser welding comprising a process wherein laser is irradiated so that it focuses on a portion where an opaque member comprising a laser-absorbing thermoplastic synthetic resin and a colorless transparent member comprising a laser ray transmitting thermoplastic synthetic resin are in contact with each other. In this case, however, when viewed from the colorless transparent member side, the welded portion differs from the non-welded portion in color and smoothness, posing a problem of poor appearance.

Additionally, Patent Document 2 and Patent Document 3 describe the use of an anthraquinone-series salt forming dye and a monoazo metal complex dye, respectively, as colorants for the laser ray transmitting colored thermoplastic resin composition, and also describes that an anthrapyridone salt forming dye can be used along with these dyes.

[Patent Document 1] Japanese Patent Laid-Open No. HEI-11-170371
[Patent Document 2] Japanese Patent Laid-Open No. 2002-228830
[Patent Document 3] Japanese Patent Laid-Open No. 2002-228831

The present invention has been developed in view of the aforementioned problems in the prior art, and is intended to provide a laser ray transmitting colored thermoplastic resin composition that is highly transmittable for laser in the laser wavelength band (wavelengths from 800 nm to 1200 nm, e.g., 808, 820, 840, 940, and 1064 nm), and that permits laser welding without undergoing color fading of the colored thermoplastic synthetic resin member in the heat treatment process prior to laser welding of the resin member, with substantially no sublimation of dye, and a method of laser welding using the same laser ray transmitting colored thermoplastic resin composition.

For accomplishing the above objective, the laser ray transmitting colored thermoplastic resin composition of the present invention contains an anthrapyridone acid dye represented by formula (1) or (3) below:

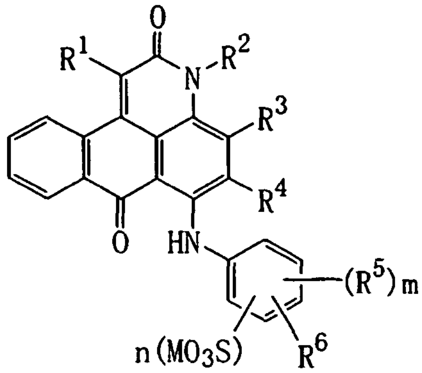

.... (1)

in formula (1),
$R^1$ represents hydrogen, an alkyl group having or not having a substituent, an alkylcarbonyl group having or not having a substituent, an arylcarbonyl group having or not having a substituent on the ring, or an alkoxycarbonyl group having or not having a substituent,
$R^2$ represents hydrogen, an alkyl group, an aryl group having or not having a substituent on the ring, an alkoxy group, an amino group, a hydroxyl group, or a halogen,
$R^3$ represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, $SO_3M$, an alkoxycarbonyl group, a cyclohexylamide group, or a group represented by formula (2);

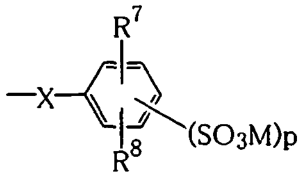

.... (2)

in formula (2),
X represents O, S or NH,
each of $R^7$ and $R^8$ independently represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, an alkoxycarbonyl group, or a cyclohexylamide group,
p represents 0 or 1,
M represents hydrogen, an alkali metal, or ammonium;
each of $R^4$ through $R^6$ independently represents hydrogen, an alkyl group, an alkoxy group, a halogen, or a hydroxyl group,
M represents hydrogen, an alkali metal, or ammonium,
each of m and n independently represents 1, 2 or 3.
provided that a plurality of $R^5$ units are present, they may be identical or not;
provided that a plurality of $SO_3M$ units are present, including $SO_3M$ in formula (2), the M units therein may be identical or not;]

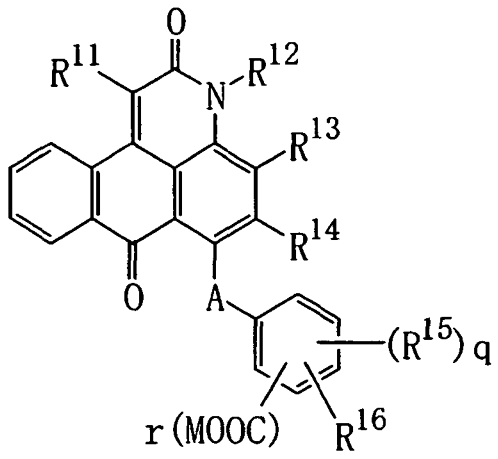

.... (3)

in formula (3),

$R^{11}$ represents hydrogen, an alkyl group having or not having a substituent, an alkylcarbonyl group having or not having a substituent, an arylcarbonyl group having or not having a substituent on the ring, or an alkoxycarbonyl group having or not having a substituent,

$R^{12}$ represents hydrogen, an alkyl group, an aryl group having or not having a substituent on the ring, an alkoxy group, an amino group, a hydroxyl group, or a halogen,

$R^{13}$ represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, $SO_3M$, an alkoxycarbonyl group, a cyclohexylamide group, or a group represented by formula (4);

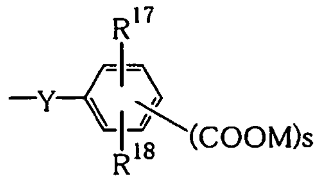

.... (4)

in formula (4),

Y represents O, S or NH,

each of $R^{17}$ and $R^{18}$ independently represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, $SO_3M$, an alkoxycarbonyl group, or a cyclohexylamide group,

s represents 0, 1 or 2,

M represents hydrogen, an alkali metal, or ammonium;

each of $R^{14}$ through $R^{16}$ independently represents hydrogen, an alkyl group, an alkoxy group, a halogen, or a hydroxyl group,

A represents O, S or NH,

M represents hydrogen, an alkali metal, or ammonium,

q represents 1, 2 or 3,

r represents 0, 1, 2 or 3.

provided that a plurality of $R^{15}$ units are present, they may be identical or not;

one or more COOM units are present in formula (3);

provided that a plurality of COOM units are present, including COOM in formula (4), the M units therein may be identical or not.

It is preferable that the number of $SO_3M$ units in formula (1) [including those in formula (2)] be 1 or 2, to achieve good dispersibility of anthrapyridone acid dye represented by formula (1) in resin.

Also, it is preferable that the number of COOM units in formula (3) [including those in formula (4)] be 1 or 2, to achieve good dispersibility of anthrapyridone acid dye represented by formula (3) in resin.

Also, it is preferable that r in formula (3) be 1 or 2 and the number of COOM units in formula (3) [including those in formula (4)] be 1 to 3, to achieve good dispersibility of anthrapyridone acid dye in resin.

The method of laser welding of the present invention is characterized in that a contact portion of a laser ray transmitting material of the aforementioned laser ray transmitting colored thermoplastic resin composition and a laser absorbent material is welded by irradiating laser so that the laser ray transmitting material transmits the laser ray and the laser ray is absorbed in the laser absorbent material with the laser ray transmitting material and the laser absorbent material in contact with each other.

The laser ray transmitting colored thermoplastic resin composition of the present invention well transmits laser ray in the wavelength range from about 800 nm for semiconductor laser to about 1200 nm for YAG laser used for laser resin welding, exhibits high fastness such as to heat and light, has a good anti-migration property, chemical resistance, etc., and exhibits a brilliant color. The colored resin member of this laser ray transmitting colored thermoplastic resin composition permits laser welding without fading of the color of the resin member in the heat treatment process prior to laser welding, with substantially no sublimation of dye.

According to the method of laser welding of the present invention, a portion of contact of a laser ray transmitting material and a laser absorbent material can be welded by irradiating laser ray so that the laser ray transmitting material transmits the laser ray and the laser ray is absorbed in the laser absorbent material with the laser ray transmitting material and the laser absorbent material in contact with each other.

Figure 1 is a lateral view of the laser welding test.
Figure 2 is an oblique view of the laser welding test.

The anthrapyridone acid dye in the laser ray transmitting colored thermoplastic resin composition of the present invention is represented by formula (1) or (3) above. This anthrapyridone acid dye is capable of vividly color resins, is excellent in laser transmission, and exhibits heat resistance essential during resin molding and laser welding, and hence offers practically satisfactory performance as a colorant for molding resins that can be used for laser welding in red dyes.

The compatibility and dispersibility of anthrapyridone acid dye represented by formula (1) or (3) for thermoplastic resin is importantly associated with the presence of an anthrapyridone skeleton and a skeleton of the formula below therein.

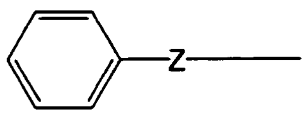

[Z is O, S, or NH]

It is desirable that the anthrapyridone acid dye represented by formula (1) or (3) in the present invention have the number of sulfo groups ($SO_3M$) or carboxy groups (COOM) in each dye adjusted in view of the compatibility and dispersibility for the thermoplastic resin used and the bindability to dyes. Provided that the compatibility and dispersibility of the dye represented by formula (1) or (3) for the thermoplastic resin used are sufficient, uniform high laser transmission, bleeding resistance, and anti-sublimation quality are more surely achieved and color fading in the heat treatment process prior to laser welding and sublimation of dye in laser welding are more surely prevented.

In the anthrapyridone acid dye represented by formula (1), it is important that the number of sulfo groups be not more than 2 (e.g., 1 sulfo group, 2 sulfo groups, or 1 sulfo group and 1 carboxy group). Also, in the anthrapyridone acid dye represented by formula (3), it is important that the number of carboxy groups be not more than 3, preferably 1 or 2.

Each of $R^1$, $R^2$, $R^3$, $R^4$, $R^5$, $R^6$ and M in formula (1) represents a group or atom shown below.

$R^1$ represents
hydrogen,
an alkyl group (e.g., alkyl group preferably having 1 to 8 carbon atoms, such as methyl, ethyl, propyl, isopropyl, n-butyl or tert-butyl) having or not having a substituent (e.g., alkoxy group, halogen, etc.),
an alkylcarbonyl group (e.g., methylcarbonyl, propylcarbonyl, pentylcarbonyl, etc.) having or not having a substituent (e.g., alkyl group having 1 to 6 carbon atoms, such as methyl, ethyl or propyl, alkoxy group having 1 to 6 carbon atoms, such as methoxy, ethoxy or propoxy, hydroxyl group, or halogen such as chlorine, bromine, iodine or fluorine, etc.),
an arylcarbonyl group (e.g., benzoyl etc.) having or not having a substituent (e.g., alkyl group having 1 to 6 carbon atoms, such as methyl, ethyl or propyl, alkoxy group having 1 to 6 carbon atoms, such as methoxy, ethoxy or propoxy, a hydroxyl group, or halogen such as chlorine, bromine, iodine or fluorine, etc.) on the ring, or

an alkoxycarbonyl group (e.g., methoxycarbonyl, ethoxycarbonyl, propoxycarbonyl, etc.) having or not having a substituent.

$R^2$ represents
hydrogen,
an alkyl group (e.g., alkyl group preferably having 1 to 8 carbon atoms, such as methyl, ethyl, propyl, isopropyl, n-butyl or tert-butyl),
an aryl group having or not having a substituent on the ring (e.g., aryl group that may be nucleus-substituted by a lower alkyl having 1 to 3 carbon atoms, a halogen such as chlorine, bromine, iodine or fluorine, or the like, such as phenyl, naphthyl, lower-alkyl-substituted phenyl, lower-alkyl-substituted naphthyl, halogenated phenyl or halogenated naphthyl),
an alkoxy group (e.g., alkoxy group preferably having 1 to 18 carbon atoms, such as methoxy, ethoxy, propoxy, butoxy, pentyloxy or hexyloxy),
an amino group,
a hydroxyl group, or
a halogen (e.g., chlorine, bromine, iodine, fluorine, etc.).

$R^3$ represents
hydrogen,
an alkyl group (e.g., alkyl group preferably having 1 to 5 carbon atoms, such as methyl, ethyl, propyl, isopropyl, n-butyl or tert-butyl),
an aryl group having or not having a substituent on the ring (e.g., aryl group that may be nucleus-substituted by a lower alkyl having 1 to 3 carbon atoms, a halogen such as chlorine, bromine, iodine or fluorine, or the like, such as phenyl, naphthyl, lower-alkyl-substituted phenyl, lower-alkyl-substituted naphthyl, halogenated phenyl or halogenated naphthyl),
an alkenyl group (e.g., alkenyl group preferably having 2 to 18 carbon atoms, such as vinyl group, allyl group, propenyl group or butenyl group),
an alkoxy group (e.g., alkoxy group preferably having 1 to 18 carbon atoms, such as methoxy, ethoxy, propoxy, butoxy, pentyloxy, or hexyloxy),
an amino group,
a hydroxyl group,
a halogen (e.g., chlorine, bromine, iodine, fluorine, etc.),
an acyl group (e.g., formyl, acetyl, propionyl, butyryl, valeryl, benzoyl, toluoyl, etc.),
an acyloxy group (e.g., -O-acetyl group, -O-propionyl group, -O-benzoyl group, -O-toluoyl group),
an acylamide group (e.g., formylamide group, acetylamide group),
an acyl-N-alkylamide group,
COOM (carboxy group),
$SO_3M$ (sulfo group),
an alkoxycarbonyl group (e.g., methoxycarbonyl group, ethoxycarbonyl group, propoxycarbonyl group, butoxycarbonyl group),
a cyclohexylamide group, or
a group represented by formula (2) above.

M represents hydrogen, an alkali metal (e.g., Li, Na, K), or ammonium.

Each of $R^4$ to $R^6$ independently represents
hydrogen,
an alkyl group (e.g., alkyl group preferably having 1 to 5 carbon atoms, such as methyl, ethyl, propyl, isopropyl, n-butyl or tert-butyl),
an alkoxy group (e.g., alkoxy group preferably having 1 to 18 carbon atoms, such as methoxy, ethoxy, propoxy, butoxy, pentyloxy or hexyloxy),
a halogen (e.g., chlorine, bromine, iodine, fluorine, etc.), or
a hydroxyl group.

Each of X, $R^7$, and $R^8$ in formula (2) represents a group or atom shown below.

X represents O, S or NH.

Each of $R^7$ and $R^8$ independently represents
hydrogen,
an alkyl group (e.g., alkyl group preferably having 1 to 5 carbon atoms, such as methyl, ethyl, propyl, isopropyl, n-butyl or tert-butyl),
an aryl group having or not having a substituent on the ring (e.g., aryl group that may be nucleus-substituted by a lower alkyl having 1 to 3 carbon atoms, a halogen such as chlorine, bromine, iodine or fluorine, or the like, such as phenyl, naphthyl, lower-alkyl-substituted phenyl, lower-alkyl-substituted naphthyl, halogenated phenyl or halogenated naphthyl),
an alkenyl group (e.g., alkenyl groups preferably having 2 to 18 carbon atoms, such as vinyl group, allyl group, propenyl

group or butenyl group),
an alkoxy group (e.g., alkoxy group preferably having 1 to 18 carbon atoms, such as methoxy, ethoxy, propoxy, butoxy, pentyloxy or hexyloxy),
an amino group,
a hydroxyl group,
a halogen (e.g., chlorine, bromine, iodine, fluorine, etc.),
an acyl group (e.g., formyl, acetyl, propionyl, butyryl, valeryl, benzoyl, toluoyl, etc.),
an acyloxy group (e.g., -O-acetyl group, -O-propionyl group, -O-benzoyl group, -O-toluoyl group),
an acylamide group (e.g., formylamide group, acetylamide group),
an acyl-N-alkylamide group,
COOM (carboxy group),
an alkoxycarbonyl group (e.g., methoxycarbonyl group, ethoxycarbonyl group, propoxycarbonyl group, butoxycarbonyl group), or
a cyclohexylamide group.

Each of $R^{11}$, $R^{12}$, $R^{13}$, $R^{14}$, $R^{15}$, $R^{16}$ and M in formula (3) represents a group or atom shown below.

$R^{11}$ represents
hydrogen,
an alkyl group (e.g., alkyl group preferably having 1 to 8 carbon atoms, such as methyl, ethyl, propyl, isopropyl, n-butyl or tert-butyl) having or not having a substituent (e.g., alkoxy group, halogen, etc.),
an alkylcarbonyl group (e.g., methylcarbonyl, propylcarbonyl, pentylcarbonyl, etc.) having or not having a substituent (e.g., alkyl group having 1 to 6 carbon atoms, such as methyl, ethyl or propyl, alkoxy group having 1 to 6 carbon atoms, such as methoxy, ethoxy or propoxy, a hydroxyl group, halogen such as chlorine, bromine, iodine or fluorine, etc.),
an arylcarbonyl group (e.g., benzoyl etc.) having or not having a substituent (e.g., alkyl group having 1 to 6 carbon atoms, such as methyl, ethyl or propyl, alkoxy group having 1 to 6 carbon atoms, such as methoxy, ethoxy or propoxy, a hydroxyl group, halogen such as chlorine, bromine, iodine or fluorine, etc.) on the ring, or
an alkoxycarbonyl group (e.g., methoxycarbonyl, ethoxycarbonyl, propoxycarbonyl, etc.) having or not having a substituent.

$R^{12}$ represents
hydrogen,
an alkyl group (e.g., alkyl group preferably having 1 to 8 carbon atoms, such as methyl, ethyl, propyl, isopropyl, n-butyl or tert-butyl),
an aryl group having or not having a substituent on the ring (e.g., aryl group that may be nucleus-substituted by a lower alkyl having 1 to 3 carbon atoms, a halogen such as chlorine, bromine, iodine or fluorine, or the like, such as phenyl, naphthyl, lower-alkyl-substituted phenyl, lower-alkyl-substituted naphthyl, halogenated phenyl or halogenated naphthyl),
an alkoxy group (e.g., alkoxy group preferably having 1 to 18 carbon atoms, such as methoxy, ethoxy, propoxy, butoxy, pentyloxy or hexyloxy),
an amino group, a hydroxyl group, or a halogen (e.g., chlorine, bromine, iodine, fluorine, etc.).

$R^{13}$ represents
hydrogen,
an alkyl group (e.g., alkyl group preferably having 1 to 5 carbon atoms, such as methyl, ethyl, propyl, isopropyl, n-butyl or tert-butyl),
an aryl group having or not having a substituent on the ring (e.g., aryl group that may be nucleus-substituted by a lower alkyl having 1 to 3 carbon atoms, a halogen such as chlorine, bromine, iodine or fluorine, or the like, such as phenyl, naphthyl, lower-alkyl-substituted phenyl, lower-alkyl-substituted naphthyl, halogenated phenyl or halogenated naphthyl),
an alkenyl group (e.g., alkenyl groups preferably having 2 to 18 carbon atoms, such as vinyl group, allyl group, propenyl group or butenyl group),
an alkoxy group (e.g., alkoxy group preferably having 1 to 18 carbon atoms, such as methoxy, ethoxy, propoxy, butoxy, pentyloxy or hexyloxy),
an amino group,
a hydroxyl group,
a halogen (e.g., chlorine, bromine, iodine, fluorine, etc.),
an acyl group (e.g., formyl, acetyl, propionyl, butyryl, valeryl, benzoyl, toluoyl, etc.),
an acyloxy group (e.g., -O-acetyl group, -O-propionyl group, -O-benzoyl group, -O-toluoyl group),
an acylamide group (e.g., formylamide group, acetylamide group),
an acyl-N-alkylamide group,
COOM (carboxy group),
$SO_3M$ (sulfo group),
an alkoxycarbonyl group (e.g., methoxycarbonyl group, ethoxycarbonyl group, propoxycarbonyl group, butoxycarbonyl

group),
a cyclohexylamide group, or
a group represented by formula (4) above.

A represents O, S or NH.

M represents hydrogen, an alkali metal (e.g., Li, Na, K), or ammonium.

Each of $R^{14}$ to $R^{16}$ independently represents
hydrogen,
an alkyl group (e.g., alkyl group preferably having 1 to 5 carbon atoms, such as methyl, ethyl, propyl, isopropyl, n-butyl or tert-butyl),
an alkoxy group (e.g., alkoxy group preferably having 1 to 18 carbon atoms, such as methoxy, ethoxy, propoxy, butoxy, pentyloxy or hexyloxy),
a halogen (e.g., chlorine, bromine, iodine, fluorine, etc.), or
a hydroxyl group.

Each of Y, $R^{17}$, and $R^{18}$ in formula (4) represents a group or atom shown below.

Y represents O, S or NH.

Each of $R^{17}$ and $R^{18}$ independently represents
hydrogen,
an alkyl group (e.g., alkyl group preferably having 1 to 5 carbon atoms, such as methyl, ethyl, propyl, isopropyl, n-butyl or tert-butyl),
an aryl group having or not having a substituent on the ring (e.g., aryl group that may be nucleus-substituted by a lower alkyl having 1 to 3 carbon atoms, a halogen such as chlorine, bromine, iodine or fluorine, or the like, such as phenyl, naphthyl, lower-alkyl-substituted phenyl, lower-alkyl-substituted naphthyl, halogenated phenyl or halogenated naphthyl),
an alkenyl group (e.g., alkenyl groups preferably having 2 to 18 carbon atoms, such as vinyl group, allyl group, propenyl group or butenyl group),
an alkoxy group (e.g., alkoxy group preferably having 1 to 18 carbon atoms, such as methoxy, ethoxy, propoxy, butoxy, pentyloxy or hexyloxy),
an amino group,
a hydroxyl group,
a halogen (e.g., chlorine, bromine, iodine, fluorine, etc.),
an acyl group (e.g., formyl, acetyl, propionyl, butyryl, valeryl, benzoyl, toluoyl, etc.),
an acyloxy group (e.g., -O-acetyl group, -O-propionyl group, -O-benzoyl group, -O-toluoyl group),
an acylamide group (e.g., formylamide group, acetylamide group),
an acyl-N-alkylamide group,
$SO_3M$ (sulfo group),
an alkoxycarbonyl group (e.g., methoxycarbonyl group, ethoxycarbonyl group, propoxycarbonyl group, butoxycarbonyl group), or
a cyclohexylamide group.

The anthrapyridone acid dye represented by formula (1) or formula (3) above is exemplified by the following examples, which, however, are not to be construed as limiting the present invention.

## Example Compound 1-1

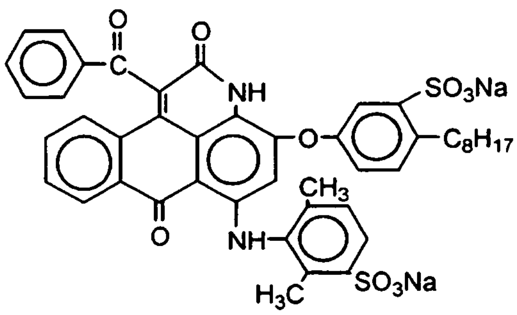

Example Compound 1-2

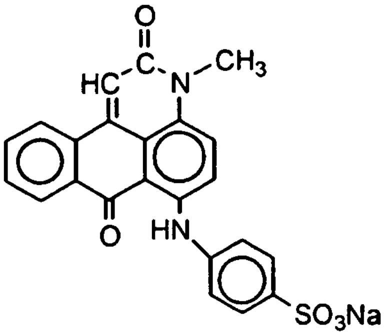

Example Compound 1-3

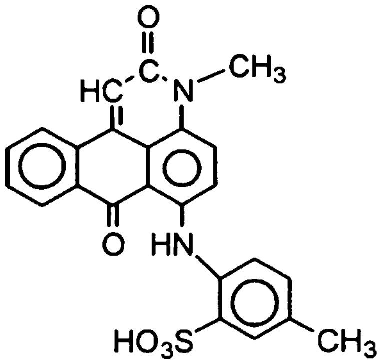

Example Compound 1-4

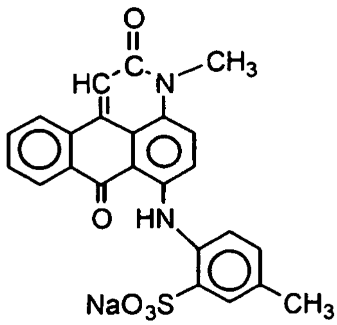

Example Compound 1-5

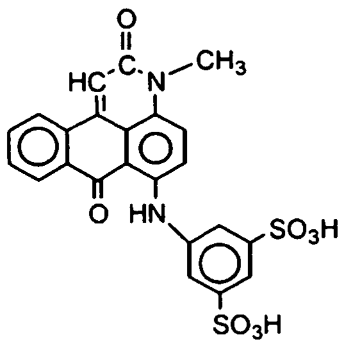

Example Compound 1-6

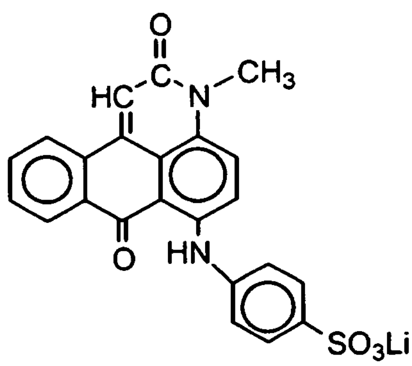

Example Compound 1-7

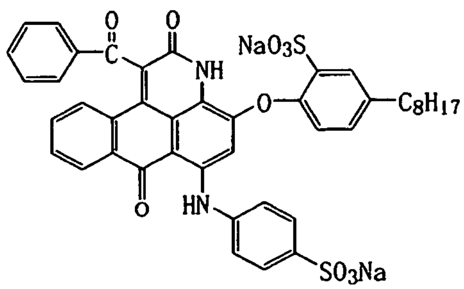

Example Compound 1-8

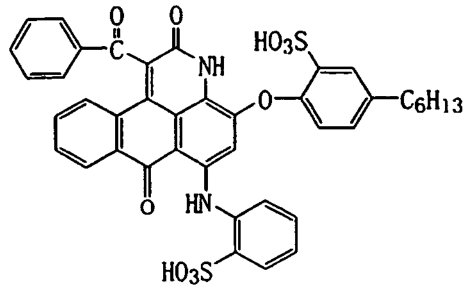

Example Compound 1-9

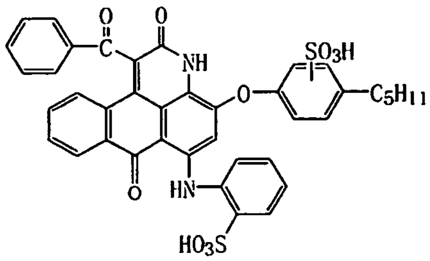

Example Compound 1-10

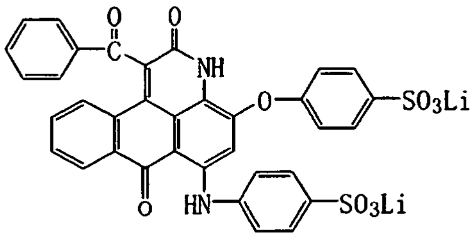

Example Compound 1-11

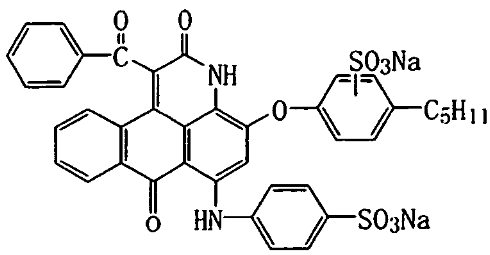

Example Compound 1-12

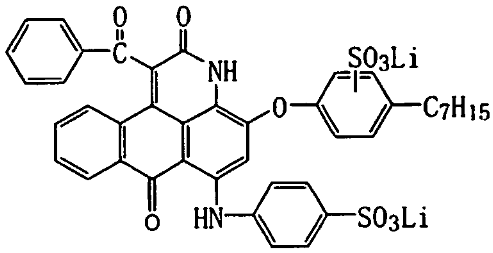

Example Compound 1-13

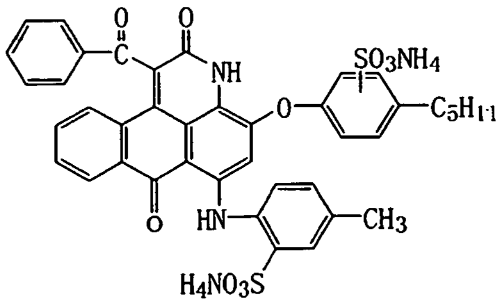

Example Compound 1-14

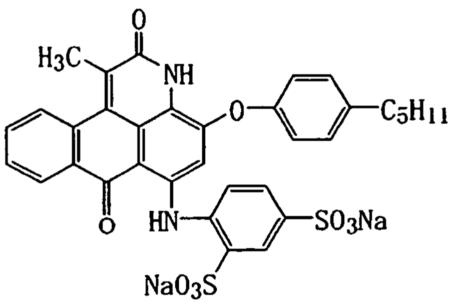

Example Compound 1-15

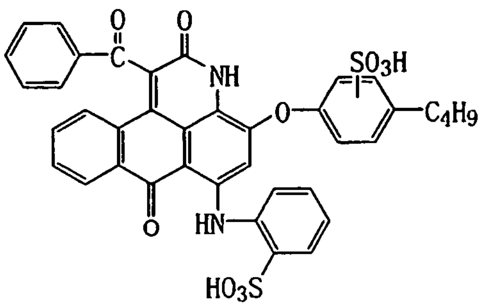

Example Compound 1-16

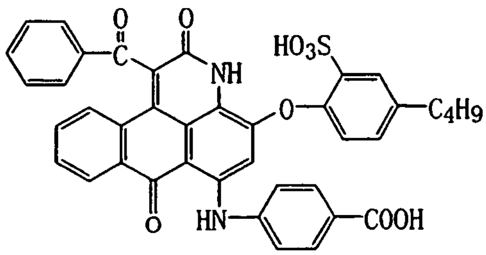

Example Compound 1-17

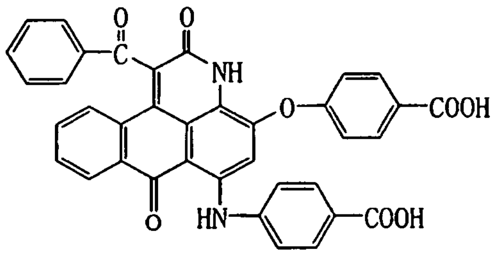

Example Compound 1-22

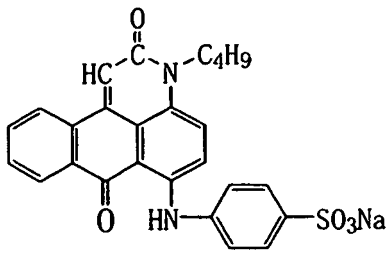

Example Compound 1-23

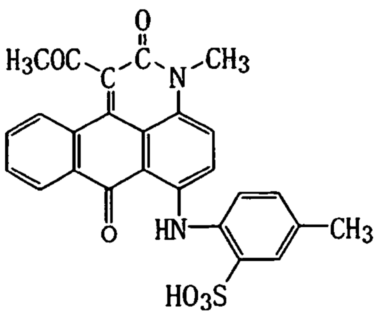

Example Compound 1-24

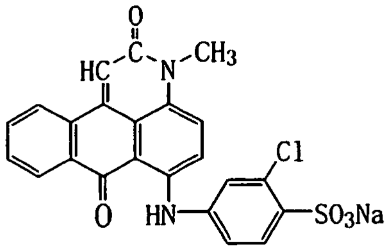

Example Compound 1-25

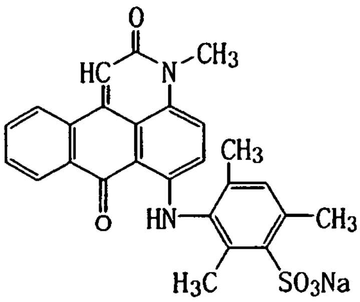

Example Compound 1-26

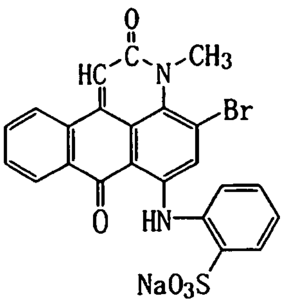

Example Compound 1-27

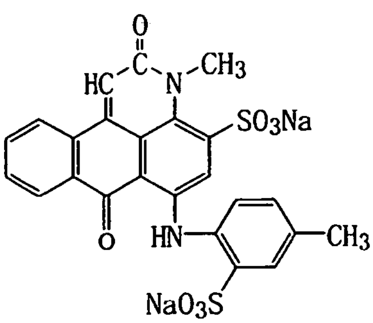

Example Compound 1-28

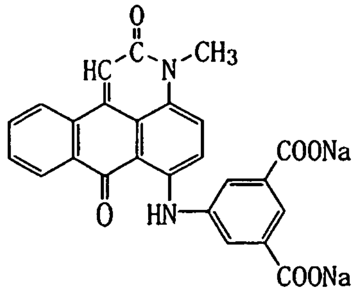

Example Compound 1-29

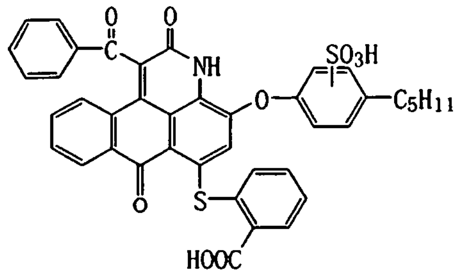

Example Compound 1-30

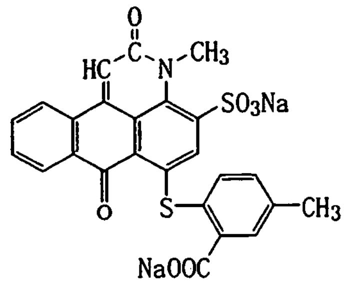

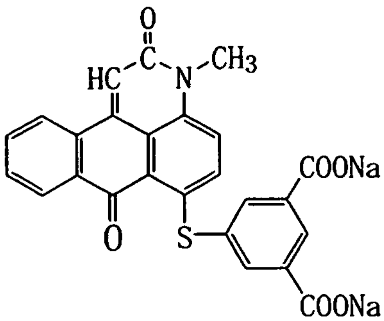

Example Compound 1-31

Example Compound 1-32

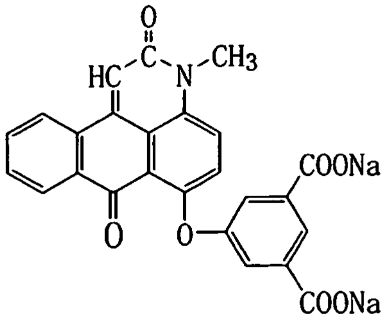

The aforementioned anthrapyridone acid dye used in the present invention has a red color or a reddish yellow color. As a colorant for the laser ray transmitting colored thermoplastic resin composition of the present invention, there may be used in combination one kind or two kinds or more of dyes or pigments that have an absorption band only outside the visible light absorption band of the anthrapyridone acid dye or have an absorption band outside and inside the visible light absorption band of the anthrapyridone acid dye, and that allows light transmission in the wavelength band of laser (wavelength from 800 nm to 1200 nm), along with the aforementioned anthrapyridone acid dye. By blending dyes or pigments having a color such as blue, purple, green or yellow, that are other colorants offering good laser transmission as described above, it is possible to impart various colors. For example, by combining the aforementioned anthrapyridone acid dye (red dye) and another green colorant, it is possible to impart a black color. Additionally, a black color can also be obtained by combining the aforementioned anthrapyridone acid dye (red dye), another blue colorant and another yellow colorant. Of the laser ray transmitting colored thermoplastic resin compositions of the present invention, black resin compositions are industrially important.

As examples of such other colorants that are capable of imparting colors to the resin, there may be mentioned organic dyes/pigments that exhibit chromatic colors such as yellow, orange, red, brown, green, blue and purple, and that transmit laser. They are not subject to structural limitation, and are exemplified by various organic dyes/pigments such as of the azomethine series, anthraquinone series, quinacridone series, dioxazine series, azo series, diketopyrrolopyrrole series, isoindolinone series, indathrone series, perynone series, perylene series, indigo series, thioindigo series, quinophthalone series, quinoline series, triphenylmethane-series, etc. It is also possible to use a salt forming dye consisting of an anionic component obtained from an acid dye and an organic ammonium component. This salt-forming reaction may employ a commonly known ionic reaction.

Referring to example blends of colorants, it is possible to obtain a laser ray transmitting colored thermoplastic resin composition in orange color by blending a red anthrapyridone acid dye in the present invention and another laser ray transmitting yellow colorant with a thermoplastic resin, and it is possible to obtain a laser ray transmitting colored thermoplastic resin composition in purple color by using the aforementioned red anthrapyridone acid dye and another laser ray transmitting blue colorant in a blend with a thermoplastic resin.

By blending the aforementioned red anthrapyridone acid dye and a green colorant, a black mixed colorant can be obtained. To obtain such a black mixed colorant, it is preferable to blend an anthrapyridone acid dye and a green colorant in the 1:1 to 1:5 ratio. Such green colorants are exemplified by anthraquinone-series dyes. Furthermore, considering bleeding resistance, it is preferable to select an anthraquinone acid dye or an anthraquinone-series salt forming dye. As examples of green colorants, there may be mentioned the salt forming dye of C.I. Acid Green 25 and hexamethylenediamine, the salt forming dye of C.I. Acid Green 27 and hexamethylenediamine, the salt forming dye of C.I. Acid Green 41 and hexamethylenediamine, etc.

By blending the aforementioned red anthrapyridone acid dye, a yellow colorant and a blue colorant, a black mixed colorant can be obtained. To obtain such a black mixed colorant, it is preferable to blend, for example, an anthrapyridone acid dye, a blue colorant and a yellow colorant in the 2:3:1 ratio. However, the blending ratio is not limited thereto. Such blue colorants are exemplified by anthraquinone-series dyes. Furthermore, considering bleeding resistance, it is preferable to select an anthraquinone acid dye or an anthraquinone-series salt forming dye.

As examples of yellow colorants, there may be mentioned the salt forming dye of C.I. Solvent Yellow 163, C.I. Solvent Yellow 114, C.I. Vat Yellow 2, C.I. Acid Yellow 42, C.I. Acid Yellow 49 or C.I. Acid Yellow 3 and hexamethylenediamine, the salt forming dye of C.I. Acid Yellow 42 and ditolylguanidine, etc.

As examples of blue colorants, there may be mentioned the salt forming dye of C.I. Acid Blue 80, C.I. Acid Blue 41, C.I. Acid Blue 127, C.I. Acid Blue 129, C.I. Solvent Blue 97, C.I. Solvent Blue 104 or C.I. Acid Blue 80 and hexamethylenediamine, the salt forming dye of C.I. Acid Blue 127 and hexamethylenediamine, the salt forming dye of C.I. Acid Blue 129 and ditolylguanidine, etc.

As examples of thermoplastic resins in the laser ray transmitting colored thermoplastic resin composition of the present invention, there may be mentioned laser ray transmitting thermoplastic resins in which pigments are dispersible or compatible, commonly known thermoplastic resins in use as carrier resins for master batches or colored pellets, etc.

As representative examples of thermoplastic resins that can be used in the laser ray transmitting colored thermoplastic resin composition of the present invention, there may be mentioned polyamide resin (PA), polyolefin resins such as polyethylene resin (PE) and polypropylene resin (PP), polystyrene resin, polymethylpentene resin, methacrylic resin, acrylic polyamide resin, EVOH (ethylene vinyl alcohol) resin, polycarbonate resin, polyester resins such as polyethylene terephthalate (PET) and polybutylene terephthalate (PBT), polyacetal resin, polyvinyl chloride resin, polyvinylidene chloride resin, polyphenylene oxide resin, polyphenylene sulfide resin, polyallylate resin, polyallylsulfone resin, fluorine resin, non-crystalline (transparent) nylon, liquid crystal polymer, etc.

Copolymer resins of two kinds or more of the aforementioned thermoplastic resin may also be used. As examples of such copolymer resins, there may be mentioned AS (acrylonitrile-styrene) copolymer resin, ABS (acrylonitrile-butadiene-styrene) copolymer resin, AES (acrylonitrile-EPDM-styrene) copolymer resin, PA-PBT copolymer resin, PET-PBT copolymer resin, PC-PBT copolymer resin, PC-PA copolymer resin, etc.

As examples of other thermoplastic resins, there may be mentioned thermoplastic elastomers such as polystyrene-series thermoplastic elastomers, polyolefin-series thermoplastic elastomers, polyurethane-series thermoplastic elastomers and polyester-series thermoplastic elastomers; and synthetic waxes or natural waxes that are based on the aforementioned resins. These thermoplastic resins are not subject to limitation as to molecular weight.

The thermoplastic resin in the laser ray transmitting colored thermoplastic resin composition of the present invention is preferably a polyester resin (including PET and PBT), polyolefin-series resin (including PE and PP), or polyamide resin (nylon) with which an anthrapyridone acid dye represented by formula (1) or (3) is highly compatible in a short time

As polyester resins, there may be mentioned, for example, polyethylene terephthalate resin obtained by a polymerization condensation reaction of terephthalic acid and ethylene glycol, and polybutylene terephthalate resin obtained by a polymerization condensation reaction of terephthalic acid and butylene glycol. As examples of other polyester resins, there may be mentioned copolymers resulting from the substitution of some terephthalic acid components (e.g., 15mol% or less [e.g., 0.5 to 15mol%], preferably 5mol% or less [e.g., 0.5 to 5mol%]) and/or some ethylene glycol components (e.g., 15mol% or less [e.g., 0.5 to 15mol%], preferably 5mol% or less [e.g., 0.5 to 5mol%]) in the aforementioned polyester resin. Two or three species or more of polyester resins may be blended.

As examples of substituents for a portion of the terephthalic acid component, there may be mentioned one kind or two kinds or more of bifunctional carboxylic acids such as aromatic dicarboxylic acids such as isophthalic acid, naphthalenedicarboxylic acid, diphenyldicarboxylic acid, diphenoxyethanedicarboxylic acid, diphenyletherdicarboxylic acid, and diphenylsulfonedicarboxylic acid; alicyclic dicarboxylic acids such as hexahydroterephthalic acid and hexahydroisophthalic acid; aliphatic dicarboxylic acids such as adipic acid, sebacic acid and azelaic acid; and p-β-hydroxyethoxybenzoic acid.

As examples of substituents for a portion of the ethylene glycol component, there may be mentioned glycols such as trimethylene glycol, tetramethylene glycol, hexmethylene glycol, decamethylene glycol, neopentyl glycol, diethylene glycol, 1,1-cyclohexanedimethylol, 1,4-cyclohexanedimethylol, 2,2-bis(4'- β-hydroxyethoxyphenyl)propane and bis(4'-β-hydroxyethoxyphenyl)sulfonic acid, and one or more kinds of multifunctional compounds of these functional derivatives etc. For applications in electronic parts and vehicle parts, polybutylene terephthalate resin is preferred.

The polyolefin resin in the present invention is not subject to limitation. As examples thereof, there may be mentioned homopolymers of α-olefins such as ethylene, propylene, butene-1, 3-methylbutene-1, 4-methylpentene-1 and octene-1 or copolymers thereof, or copolymers (as copolymers, there may be mentioned block copolymers, random copolymers, and graft copolymers) of these α-olefins and other copolymerizable unsaturated monomers. More specifically, there may be mentioned polyethylene-series resins such as high-density polyethylene, intermediate-density polyethylene, low-density polyethylene, linear low-density polyethylene, ethylene-vinyl acetate copolymer and ethylene-ethyl acrylate copolymer; polypropylene-series resins such as propylene homopolymers, propylene-ethylene block copolymers or random copolymers and propylene-ethylene-butene-1 copolymers; polybutene-1, poly-4-methylpentene-1, etc. These polyolefin resins may be used singly or in combination of two or more kinds. In the present invention, it is preferable that of these polyolefin resins a polypropylene resin and/or a polyethylene resin be used. A polypropylene-series resin is particularly preferred. This polypropylene-series resin is not subject to limitation and can be used over a broad range of molecular weight.

As a polyolefin resin, there may be used an acid-modified polyolefin modified with a unsaturated carboxylic acid or a derivative thereof, or a resin containing a foaming agent like foaming polypropylene. Also, a rubber such as an ethylene- α -olefin-series copolymer rubber, ethylene- α -olefin-non-conjugated dien-series compound copolymer (e.g., EPDM etc.), ethylene-aromatic monovinyl compound-conjugated dien-series compound copolymer rubber, or a hydrogenated production thereof may be contained in the polyolefin resin.

As polyamide resins (nylons), there may be mentioned nylon 6, nylon 66, nylon 46, nylon 11, nylon 12, nylon 69, nylon 610, nylon 612, nylon 96, high-melting-point nylon, nylon RIM, nylon MIX6, etc.; copolymers of 2 or more thereof, i.e., nylon 6/66 copolymer, nylon 6/66/610 copolymer, nylon 6/66/11/12 copolymer, etc.

The amount of colorant used in the laser ray transmitting colored thermoplastic resin composition of the present invention may, for example, be 0.01 to 10% by weight relative to thermoplastic resin. The amount is preferably 0.1 to 5% by weight, more preferably 0.1 to 1% by weight.

$T_{colored\ resin}$ /$T_{noncolored\ resin}$, i.e., the ratio of $T_{colored\ resin}$, the transmittance for a laser ray having a wavelength of 940 nm in the laser ray transmitting colored thermoplastic resin composition of the present invention, and $T_{noncolored\ resin}$, the transmittance for a laser ray having a wavelength of 940 nm in a noncolored resin composition of the same composition but without a colorant, may, for example, be 0.5 or more, and is preferably 0.7 to 1.1, more preferably 0.8 to 1.1.

The laser ray transmitting colored thermoplastic resin composition of the present invention enables laser welding offering practically effective tensile strength, provided that the laser transmittance at the oscillating wavelength of the resin welding laser used is not less than 20%.

The laser ray transmitting colored thermoplastic resin composition of the present invention may contain appropriate amounts of various reinforcing materials according to its application and intended use. Any reinforcing material can be used, as long as it is usable for ordinary reinforcement of synthetic resins. For example, glass fiber, carbon fiber, other inorganic fibers, and organic fibers (aramid, polyphenylene sulfide, nylon, polyester, liquid crystal polymer, etc.), etc. can be used, with preference given to glass fiber for reinforcement of resins that require transparency. The fiber length of glass fiber is preferably 2 to 15 mm and the fiber diameter is preferably 1 to 20 μm. The form of glass fiber is not subject to limitation, and may be of any one, e.g., roving or milled fiber. These glass fibers may be used singly or in combination of two or more kinds. Their content is preferably 5 to 120% by weight relative to 100% by weight of thermoplastic resin. If the content is less than 5% by weight, a sufficient glass fiber-reinforcing effect is unlikely to be attained; if the content exceeds 120% by weight, moldability is likely to decrease. Their content is preferably 10 to 60% by weight, particularly preferably 20 to 50% by weight.

The laser ray transmitting colored thermoplastic resin composition of the present invention may be formulated with a filler as necessary. Such fillers include tabular fillers such as mica, sericite and glass flake, silicates such as talc, kaolin, clay, wollastonite, bentonite, asbestos and aluminum silicate, metal oxides such as alumina, silicon oxide, magnesium oxide, zirconium oxide and titanium oxide, carbonates such as calcium carbonate, magnesium carbonate and dolomite, sulfates such as calcium sulfate and barium sulfate, and particulate fillers such as glass beads, ceramic beads, boron nitride and silicon carbide. The amount of filler added in the composition of the present invention is preferably in the range from 5 to 50% by weight.

These reinforcing materials and fillers may be used in combination of two or more kinds, respectively. Also, using these reinforcing fiber materials and fillers after being treated with a coupling agent such as of the silane series, epoxy series or titanate series, or another surface treatment agent, is preferable in that better mechanical strength is obtained.

The laser ray transmitting colored thermoplastic resin composition of the present invention may also be formulated with various additives as necessary. Such additives include, for example, auxochromic agents, dispersing agents, stabilizers, plasticizers, quality-improving agents, ultraviolet absorbents or light stabilizers, antioxidants, antistatic agents, lubricants, mold-releasing agents, crystallization promoters, crystal nucleating agents, flame retardants, and elastomers for improving impact resistance.

The laser ray transmitting colored thermoplastic resin composition of the present invention is obtained by blending raw materials by an optionally chosen method of blending. It is generally preferable that these blending ingredients be homogenized to the maximum possible extent. Specifically, for example, all raw materials are blended and homogenized in a mechanical mixer such as a blender, kneader, Banbury mixer, roll mixer or extruder to yield a colored resin composition. Alternatively, after some raw materials are blended in a mechanical mixer, the remaining ingredients are added, followed by further blending and homogenization, to yield a resin composition. Additionally, previously dry-blended raw materials may be kneaded and homogenized in a molten state in a heated extruder, then extruded into a needle, which needle is then cut into desired length to yield a colored granular resin composition (colored pellets).

A master batch of the laser ray transmitting colored thermoplastic resin composition of the present invention is obtained by an optionally chosen method. For example, a master batch can be obtained by blending a master batch base resin powder or pellets and a colorant containing at least an anthrapyridone acid dye of formula (1) or (3) above in a mechanical mixer such as a tumbler or super-mixer, and then thermally melting and pelletizing or coarsely granulating the ingredients in an extruder, batch-wise kneader, roll kneader, or the like. A master batch can also be obtained by, for example, adding a colorant to a master batch resin while remaining in solution after synthesis, and then removing the solvent.

By blending the thus-obtained master batch with a thermoplastic resin and molding this blend by a conventional method, it is possible to obtain a more uniform laser ray transmitting resin member of excellent laser transmission quality.

In particular, when using a black mixed colorant of a combination of an anthrapyridone acid dye of formula (1) or (3) above and a plurality of colorants, this effect is remarkable. As such, the master batch may contain a colorant at 1 to 30% by weight, for example, relative to the amount of thermoplastic resin. The content ratio is preferably 5 to 15% by weight.

Molding of the laser ray transmitting colored thermoplastic resin composition of the present invention can be achieved by various procedures in common use. For example, the laser ray transmitting colored thermoplastic resin composition of the present invention can be molded using colored pellets in a processing machine such as an extruder, injection molding machine or roll mill, and can also be molded by blending transparent resin pellets or powder, a milled colorant, and where necessary various additives, in an appropriate mixer, and molding this blend using a processing machine. It is also possible, for example, to add a colorant to a monomer containing an appropriate polymerization catalyst, and polymerize this blend into a desired resin, which resin is molded by an appropriate method. Any commonly used method of molding can be adopted, e.g., injection molding, extrusion molding, compression molding, foaming molding, blow molding, vacuum molding, injection blow molding, rotation molding, calender molding, and solution casting. By such molding, laser ray transmitting materials in various shapes can be obtained.

The method of laser welding of the present invention comprises welding a portion of contact of a laser ray transmitting material comprising the aforementioned laser ray transmitting colored thermoplastic resin composition and a laser absorbent material by irradiating laser so that the laser transmitting material transmits the laser and the laser ray is absorbed in the laser absorbent material with the laser ray transmitting material and the laser absorbent material in contact with each other.

Generally, advantages of laser welding include increased degrees of freedom for the shapes of the molds for the molded resin products of laser ray transmitting material and laser absorbent material to be welded because of the capability of 3-dimensional welding, improved appearance because of freedom from burrs on the welded surface unlike in vibration welding, and applicability to electronic components because of freedom from vibration and wear dust. Conversely, its disadvantages include the necessity of pre-investment in equipment known as laser welding machine, and possible gap formation between the laser ray transmitting material and laser absorbent material to be welded, both of which are made of resin, due to sink during their molding. The problem with this gap, in particular, is of greatest concern in performing laser welding; there are many cases where a fixture such as a clamp is made on a case-by-case basis to adapt it to the shapes of the members to be welded. It is known that if a gap of 0.02 mm occurs, welding strength halves compared to the gap-free state, and that welding fails if the gap is 0.05 mm or more.

Available laser welding machines include the scanning type, in which laser moves, the masking type, in which the member to be welded move, and the type in which laser is irradiated to the member to be welded from multiple directions simultaneously. It is the scanning type which is drawing attention from the automobile industry, with a scanning speed of 5 m/min serving as the criterion for production tact time.

Because laser welding relies on the conversion of light energy of laser to heat energy, welding performance is considerably influenced by laser welding conditions. Generally, the amount of heat produced by irradiated laser on the absorbent member surface can be calculated by the equation below:

$$\text{Amount of heat on absorbent member surface } (J/mm^2) = \text{laser output } (W)/[\text{scanning rate } (mm/sec) \times \text{ laser spot diameter } (mm)]$$

To increase production efficiency, the scanning speed must be increased; to achieve this, a laser welding machine of the high output type is necessary.

Additionally, to increase welding strength, some heat on the surface of the laser-absorbing member is necessary. This heat must be determined by combining various conditions such as increased output setting, decreased scanning speed, and decreased spot diameter. Since too great surface heat provided by laser affects the appearance of the welded portion and, in the extreme case, causes the laser-absorbing member to smoke, laser welding condition settings are important and the laser transmittance of the laser ray transmitting resin material to be welded is of paramount importance.

It is preferable that the laser absorbent material comprise a laser-absorbing colored resin composition (preferably thermoplastic resin composition) incorporating at least carbon black as a laser-absorbing black colorant. In this case, it is preferable that the carbon black used be 20 to 30 nm in primary particle diameter. Furthermore, it is preferable that the carbon black used have a BET specific surface area of 30 to 300 $m^2/g$, preferably 100 to 250 $m^2/g$. By using such carbon black, it is possible to obtain a laser absorbent material that contains highly dispersed carbon black, and that absorbs laser at high absorption rates.

It is also possible to use a laser-absorbing colored resin composition incorporating a colorant other than carbon black and another laser absorbent (or incorporating another laser-absorbing colorant).

Substances that can be used as both the aforementioned colorant and laser absorbent include nigrosine and aniline black. As examples of other laser absorbents, there may be mentioned phthalocyanine, naphthalocyanine, perylene, quaterylene, metal complexes, squaric acid derivatives, immonium dyes, polymethine, etc.; 2 or more thereof may be blended to obtain a black laser absorbent. Furthermore, it is also possible to use the aforementioned laser ray transmitting colorant and laser absorbent in combination. A preferred laser-absorbing black colorant is a combination of carbon black and nigrosine.

The amount of colorant used in such a laser-absorbing colored resin composition may be, for example, 0.01 to 10% by weight relative to resin (preferably thermoplastic resin), and is preferably 0.05 to 5% by weight. The laser absorbent material can be produced in the same manner as the laser ray transmitting material except for the containment of a laser absorbent.

EXAMPLES

The present invention is hereinafter described in more detail by means of, but is not limited to, the following examples.

Table 1 shows the colorants prepared in Production Examples 1 to 11 and used in Examples, and the colorants prepared in Comparative Production Examples 1 to 6 and used in Comparative Examples. The acid dyes for the respective Production Examples correspond to the colorants shown in Example Compounds above.

The colorants of Production Examples 2, 4, 7, 9 and 10 are black colorants prepared by blending a plurality of dyes according to the content ratios by weight shown in the relevant column using a simple mechanical mixer.

Table 1

| | Colorant | Content ratio |
|---|---|---|
| Production Example 1 | Example Compound 1-5 | - |
| Production Example 2 | Compound 1-5 | 5 |
| | Salt forming dye of C.I. Acid Green 27 (anthraquinone dye) and hexamethylenediamine | 26 |
| Production Example 3 | Compound 1-3 | - |
| Production Example 4 | Example Compound 1-3 | 5 |
| | Salt forming dye of C.I. Acid Green 25 (anthraquinone dye) and hexamethylenediamine | 26 |
| Production Example 5 | Example Compound 1-4 | - |
| Production Example 6 | Example Compound 1-19 | - |
| Production Example 7 | Example Compound 1-19 | 5 |
| | Salt forming dye of C.I. Acid Green 27 (anthraquinone dye) and hexamethylenediamine | 26 |
| Production Example 8 | Salt forming dye of Example Compound 1-16 and benzyltrimethylammonium chloride | - |
| Production Example 9 | Example Compound 1-11 | 2 |
| | Salt forming dye of C.I. Acid Blue 80 (anthraquinone dye) and hexamethylenediamine | 3 |
| | C.I. Acid Yellow 42 | 1 |
| Production Example 10 | Example Compound 1-27 | 2 |
| | Salt forming dye of C.I. Acid Blue 80 (anthraquinone dye) and hexamethylenediamine | 3 |
| | C.I. Acid Yellow 42 | 1 |
| Production Example 11 | Example Compound 1-17 | - |
| Comparative Production Example 1 | Salt forming dye of Example Compound 1-4 and benzyltributylammonium chloride | - |

(continued)

| | Colorant | Content ratio |
|---|---|---|
| Comparative Production Example 2 | Salt forming dye of Example Compound 1-2 and benzyltrimethylammonium chloride | - |
| Comparative Production Example 3 | Salt forming dye of Example Compound 1-1 and benzyltributylammonium chloride | - |
| Comparative Production Example 4 | Salt forming dye of Example Compound 1-2 and benzyltrimethylammonium chloride | - |
| Comparative Production Example 5 | Neutral anthrapyridone dye of C.I. Solvent Red 52 | - |
| Comparative Production Example 6 | Salt forming dye of Example Compound 1-19 and benzyltrimethylammonium chloride | - |

In Examples 1 to 5 and Comparative Examples 1 and 2, laser ray transmitting colored thermoplastic resin compositions incorporating polyamide 66 resin are described.

Example 1

Fiber-reinforced polyamide 66 resin....400 g (manufactured by DuPont, trade name: ZYTEL70G33L)
Colorant of Production Example 1....0.80 g

The above ingredients were placed in a stainless steel tumbler and mixed with stirring for 1 hour. The blend obtained was injection-molded by an ordinary method at a cylinder temperature of 290°C and a mold temperature of 80°C using an injection molding machine (manufactured by Toyo Machinery & Metal Co., Ltd., product number: Si-50); a uniformly colored red test piece having good appearance and surface gloss was obtained.

Example 2

Fiber-reinforced polyamide 66 resin....400 g (manufactured by DuPont, trade name: ZYTEL70G33L)
Colorant of Production Example 2....1.20 g

The above ingredients were placed in a stainless steel tumbler and mixed with stirring for 1 hour. The blend obtained was injection-molded by an ordinary method at a cylinder temperature of 290°C and a mold temperature of 80°C using an injection molding machine (manufactured by Toyo Machinery & Metal Co., Ltd., product number: Si-50); a uniformly colored black test piece having good appearance and surface gloss was obtained.

Example 3

Fiber-reinforced polyamide 66 resin....400 g (manufactured by DuPont, trade name: ZYTEL70G33L)
Colorant of Production Example 6....0.80 g

The above ingredients were placed in a stainless steel tumbler and mixed with stirring for 1 hour. The blend obtained was injection-molded by an ordinary method at a cylinder temperature of 290°C and a mold temperature of 80°C using an injection molding machine (manufactured by Toyo Machinery & Metal Co., Ltd., product number: Si-50); a uniformly colored red test piece having good appearance and surface gloss was obtained.

Example 4

Fiber-reinforced polyamide 66 resin....400 g (manufactured by DuPont, trade name: ZYTEL70G33L)
Colorant of Production Example 7....1.20 g

The above ingredients were placed in a stainless steel tumbler and mixed with stirring for 1 hour. The blend obtained was injection-molded by an ordinary method at a cylinder temperature of 290°C and a mold temperature of 80°C using an injection molding machine (manufactured by Toyo Machinery & Metal Co., Ltd., product number: Si-50); a uniformly colored black test piece having good appearance and surface gloss was obtained.

Example 5

Fiber-reinforced polyamide 66 resin....400 g (manufactured by DuPont, trade name: ZYTEL70G33L)

Colorant of Production Example 10....1.20 g

The above ingredients were placed in a stainless steel tumbler and mixed with stirring for 1 hour. The blend obtained was injection-molded by an ordinary method at a cylinder temperature of 290°C and a mold temperature of 80°C using an injection molding machine (manufactured by Toyo Machinery & Metal Co., Ltd., product number: Si-50); a uniformly colored black test piece having good appearance and surface gloss was obtained.

Comparative Example 1

Fiber-reinforced polyamide 66 resin....400 g (manufactured by DuPont, product number: ZYTEL70G33L)
Colorant of Comparative Production Example 1....0.80 g

The above ingredients were placed in a stainless steel tumbler and mixed with stirring for 1 hour. The blend obtained was injection-molded by an ordinary method at a cylinder temperature of 290°C and a mold temperature of 80°C using an injection molding machine (manufactured by Toyo Machinery & Metal Co., Ltd., product number: Si-50); a red test piece was obtained.

Comparative Example 2

Fiber-reinforced polyamide 66 resin....400 g (manufactured by DuPont, product number: ZYTEL70G33L)
Colorant of Comparative Production Example 5....0.80 g

The above ingredients were placed in a stainless steel tumbler and mixed with stirring for 1 hour. The blend obtained was injection-molded by an ordinary method at a cylinder temperature of 290°C and a mold temperature of 80°C using an injection molding machine (manufactured by Toyo Machinery & Metal Co., Ltd., product number: Si-50); a red test piece was obtained.

In Examples 6 to 9 and Comparative Example 3, laser ray transmitting colored thermoplastic resin compositions incorporating polyamide 6 resin are described.

Example 6

Fiber-reinforced polyamide 6 resin....400 g (manufactured by Ube Industries, product number: 1015GU9)
Colorant of Production Example 3....0.80 g

The above ingredients were placed in a stainless steel tumbler and mixed with stirring for 1 hour. The blend obtained was injection-molded by an ordinary method at a cylinder temperature of 270°C and a mold temperature of 80°C using an injection molding machine (manufactured by Toyo Machinery & Metal Co., Ltd., product number: Si-50); a uniformly colored red test piece having good appearance and surface gloss was obtained.

Example 7

Fiber-reinforced polyamide 6 resin....400 g (manufactured by Ube Industries, product number: 1015GU9)
Colorant of Production Example 4....1.20 g

The above ingredients were placed in a stainless steel tumbler and mixed with stirring for 1 hour. The blend obtained was injection-molded by an ordinary method at a cylinder temperature of 270°C and a mold temperature of 80°C using an injection molding machine (manufactured by Toyo Machinery & Metal Co., Ltd., product number: Si-50); a uniformly colored black test piece having good appearance and surface gloss was obtained.

Example 8

Fiber-reinforced polyamide 6 resin....400 g (manufactured by Ube Industries, product number: 1015GU9)
Colorant of Production Example 8....0.80 g

The above ingredients were placed in a stainless steel tumbler and mixed with stirring for 1 hour. The blend obtained was injection-molded by an ordinary method at a cylinder temperature of 270°C and a mold temperature of 80°C using an injection molding machine (manufactured by Toyo Machinery & Metal Co., Ltd., product number: Si-50); a uniformly colored red test piece having good appearance and surface gloss was obtained.

Example 9

Fiber-reinforced polyamide 6 resin....400 g (manufactured by Ube Industries, product number: 1015GU9)
Colorant of Production Example 9....1.20 g

The above ingredients were placed in a stainless steel tumbler and mixed with stirring for 1 hour. The blend

obtained was injection-molded by an ordinary method at a cylinder temperature of 270°C and a mold temperature of 80°C using an injection molding machine (manufactured by Toyo Machinery & Metal Co., Ltd., product number: Si-50); a uniformly colored black test piece having good appearance and surface gloss was obtained.

Comparative Example 3

Fiber-reinforced polyamide 6 resin....400 g (manufactured by Ube Industries, product number: 1015GU9)
Colorant of Comparative Production Example 2....0.80 g

The above ingredients were placed in a stainless steel tumbler and mixed with stirring for 1 hour. The blend obtained was injection-molded by an ordinary method at a cylinder temperature of 270°C and a mold temperature of 80°C using an injection molding machine (manufactured by Toyo Machinery & Metal Co., Ltd., product number: Si-50); a red test piece was obtained.

In Examples 10 and 11 and Comparative Examples 4 and 5, laser ray transmitting colored thermoplastic resin compositions incorporating polybutylene terephthalate resin are described.

Example 10

Polybutylene terephthalate resin....400 g (manufactured by Mitsubishi Engineering Plastics, product number: 5008AS)
Colorant of Production Example 3....0.80 g

The above ingredients were placed in a stainless steel tumbler and mixed with stirring for 1 hour. The blend obtained was injection-molded by an ordinary method at a cylinder temperature of 260°C and a mold temperature of 80°C using an injection molding machine (manufactured by Toyo Machinery & Metal Co., Ltd., product number: Si-50); a uniformly colored red test piece having good appearance and surface gloss was obtained.

Example 11

Polybutylene terephthalate resin....400 g (manufactured by Mitsubishi Engineering Plastics, product number: 5008AS)
Colorant of Production Example 8....0.80 g

The above ingredients were placed in a stainless steel tumbler and mixed with stirring for 1 hour. The blend obtained was injection-molded by an ordinary method at a cylinder temperature of 260°C and a mold temperature of 80°C using an injection molding machine (manufactured by Toyo Machinery & Metal Co., Ltd., product number: Si-50); a uniformly colored red test piece having good appearance and surface gloss was obtained.

Comparative Example 4

Polybutylene terephthalate resin....400 g (manufactured by Mitsubishi Engineering Plastics, product number: 5008AS)
Colorant of Comparative Production Example 3....0.80 g

The above ingredients were placed in a stainless steel tumbler and mixed with stirring for 1 hour. The blend obtained was injection-molded by an ordinary method at a cylinder temperature of 260°C and a mold temperature of 80°C using an injection molding machine (manufactured by Toyo Machinery & Metal Co., Ltd., product number: Si-50); a red test piece was obtained.

Comparative Example 5

Polybutylene terephthalate resin....400 g (manufactured by Mitsubishi Engineering Plastics, product number: 5008AS)
Colorant of Comparative Production Example 6....0.80 g

The above ingredients were placed in a stainless steel tumbler and mixed with stirring for 1 hour. The blend obtained was injection-molded by an ordinary method at a cylinder temperature of 260°C and a mold temperature of 80°C using an injection molding machine (manufactured by Toyo Machinery & Metal Co., Ltd., product number: Si-50); a red test piece was obtained.

In Examples 12 and 13 and Comparative Example 6, laser ray transmitting colored thermoplastic resin compositions incorporating polypropylene resin are described.

Example 12

Fiber-reinforced polypropylene resin....400 g (manufactured by Japan Polychem, product number: HG30U)
Colorant of Production Example 5....0.80 g

The above ingredients were placed in a stainless steel tumbler and mixed with stirring for 1 hour. The blend obtained was injection-molded by an ordinary method at a cylinder temperature of 220°C and a mold temperature of 40°C using an injection molding machine (manufactured by Toyo Machinery & Metal Co., Ltd., product number: Si-50); a uniformly cololred red test piece having good appearance and surface gloss was obtained.

Example 13

Fiber-reinforced polypropylene resin....400 g (manufactured by Japan Polychem, product number: HG30U)
Colorant of Production Example 11....0.80 g

The above ingredients were placed in a stainless steel tumbler and mixed with stirring for 1 hour. The blend obtained was injection-molded by an ordinary method at a cylinder temperature of 220°C and a mold temperature of 40°C using an injection molding machine (manufactured by Toyo Machinery & Metal Co., Ltd., product number: Si-50); a uniformly colored red test piece having good appearance and surface gloss was obtained.

Comparative Example 6

Fiber-reinforced polypropylene resin....400 g (manufactured by Japan Polychem, product number: HG30U)
Colorant of Comparative Production Example 4....0.80 g

The above ingredients were placed in a stainless steel tumbler and mixed with stirring for 1 hour. The blend obtained was injection-molded by an ordinary method at a cylinder temperature of 220°C and a mold temperature of 40°C using an injection molding machine (manufactured by Toyo Machinery & Metal Co., Ltd., product number: Si-50); a red test piece was obtained.

Physical property assessments

The laser ray transmitting colored thermoplastic resin compositions obtained in Examples 1 to 13 and Comparative Examples 1 to 6 and similarly molded uncolored resin test pieces were subjected to physical property assessments by the methods described below. The results are shown in Tables 2 to 5 below.

(1) Determination of transmittance
Each test piece was set to a spectrophotometer (manufactured by JASCO Corporation, product number: V-570 model), and its transmittance was determined over a wavelength range of $\lambda$ = 400 to 1200 nm. Tables 2 to 5 show the transmittances of respective test pieces for semiconductor laser at a wavelength of 940 nm.

(2) Heat resistance test and assessment
In the injection molding in Examples 1 to 13 and Comparative Examples 1 to 6 above, a blend of ingredients was subjected to an ordinary shot, and thereafter the remaining portion of the blend was retained at the then cylinder temperature for 15 minutes; injection molding was then conducted to yield test pieces.
If the discoloration/fading of the color of the test piece obtained by retaining in the cylinder for 15 minutes had not advanced compared to the color of the test piece obtained by a conventional shot, the test piece obtained by retaining in the cylinder for 15 minutes was judged to be resistant to heat.

(3) Light fastness test and assessment
Each test piece obtained in the injection molding in Examples 1 to 13 and Comparative Examples 1 to 6 above was set to a light fastness tester (manufactured by Toyo Seiki, product number: Atlas Ci-4000) and allowed to stand under the conditions shown below for 150 hours, and thereafter each test piece was taken out.
Continuous irradiation method
Emission illuminance: 60 $W/m^2$ (control light wavelength: 300 to 400 nm)
BST temperature: 83°C
Chamber inside temperature: 55°C
Chamber inside humidity: 50%
If the discoloration/fading of the color of the test piece obtained after 150 hours had not advanced compared to the color of the test piece before testing, the test piece obtained after 150 hours was judged to be fast to light.

(4) Preparation of laser-absorbing test pieces for laser welding test and laser welding test
A laser-absorbing test piece (laser absorbent) incorporating polyamide 66 resin was prepared as described below.

Example 14

Fiber-reinforced polyamide 66 resin....400 g (manufactured by DuPont, product number: ZYTEL [registered trademark] 70G33L)
Carbon black....0.40 g

The above ingredients were placed in a stainless steel tumbler and mixed with stirring for 1 hour. The blend obtained was injection-molded by an ordinary method at a cylinder temperature of 290°C and a mold temperature of 80°C using an injection molding machine (manufactured by Toyo Machinery & Metal Co., Ltd., product number: Si-50); a uniformly colored black laser-absorbing test piece having good appearance and surface gloss was obtained.

A laser-absorbing test piece (laser absorbent) incorporating polyamide 6 resin was prepared as described below.

Example 15

Fiber-reinforced polyamide 6 resin....400 g (manufactured by Ube Industries, product number: 1015GU9)
Carbon black....0.40 g

The above ingredients were placed in a stainless steel tumbler and mixed with stirring for 1 hour. The blend obtained was injection-molded by an ordinary method at a cylinder temperature of 270°C and a mold temperature of 80°C using an injection molding machine (manufactured by Toyo Machinery & Metal Co., Ltd., product number: Si-50); a uniformly colored black laser-absorbing test piece having good appearance and surface gloss was obtained.

A laser-absorbing test piece (laser absorbent) incorporating polybutylene terephthalate resin was prepared as described below.

Example 16

Polybutylene terephthalate resin....400 g (manufactured by Mitsubishi Engineering Plastics, product number: 5008AS)
Carbon black....2.00 g

The above ingredients were placed in a stainless steel tumbler and mixed with stirring for 1 hour. The blend obtained was injection-molded by an ordinary method at a cylinder temperature of 260°C and a mold temperature of 80°C using an injection molding machine (manufactured by Toyo Machinery & Metal Co., Ltd., product number: Si-50); a uniformly colored black laser-absorbing test piece having good appearance and surface gloss was obtained.

A laser-absorbing test piece (laser absorbent) incorporating polypropylene resin was prepared as described below.

Example 17

Fiber-reinforced polypropylene resin....400 g (manufactured by Japan Polychem, product number: HG30U)
Carbon black....0.80 g

The above ingredients were placed in a stainless steel tumbler and mixed with stirring for 1 hour. The blend obtained was injection-molded by an ordinary method at a cylinder temperature of 220°C and a mold temperature of 40°C using an injection molding machine (manufactured by Toyo Machinery & Metal Co., Ltd., product number: Si-50); a uniformly colored black laser-absorbing test piece having good appearance and surface gloss was obtained.

As shown in Figure 1 (lateral view) and Figure 2 (oblique view), each test piece 10 of Examples 1 to 13 and Comparative Examples 1 to 6 and laser-absorbing test piece 12 obtained in Examples 14 to 17 above [all 60 mm length x 18 mm width x 3 mm thickness (1.5 mm thickness for 20 mm of the length)], were superposed with respective portions 20 mm length x 18 mm width x 1.5 mm thickness in contact with each other.

The superposed portion was irradiated with a laser beam 14 from above the test piece 10 (in the Figure) using a diode laser of 60 W output [wavelength: 940 nm, continuous] (manufactured by Fine Devices Company), while scanning at a variable scanning speed in the lateral direction (direction perpendicular to the plane of Figure 1).

If the test piece 10 transmits the laser ray and the laser ray is absorbed in the laser-absorbing test piece 12, the laser-absorbing test piece 12 would generate heat, by which heat the laser-absorbing test piece 12 is molten around the portion that has absorbed the laser, and the test piece 10 is also molten, the resins of the two test pieces fuse together, and upon cooling the two pieces are joined together. In Figure 2, 16 indicates the welded portion.

(5) Tensile strength test

The welded product obtained in (4) above was subjected to a tensile strength test on both the test piece 10 side and the laser-absorbing test piece 12 side in the longitudinal direction (left-right direction in Figure 1) at a pulling speed of 10 mm/min in accordance with JIS K7113-1995 using a tensile strength tester (AG-50kNE, manufactured by Shimadzu Corporation), in order to determine its tensile welding strength.

Examples and Comparative Examples with fiber-reinforced polyamide 66 resin (GFPA66 resin

Table 2

| | (1) | (2) | (3) | (4) | | | (5) |
|---|---|---|---|---|---|---|---|
| | Transmittance test (%) | Heat resistance test | Light fastness test | Laser welding test | | | Tensile strength test |
| | | | | Scanning speed (mm/sec) | Surface heat (J/mm$^2$) | Welding state | Tensile strength (Mpa) |
| GFPA66 resin | 70 | - | - | - | - | - | - |
| Example 1 | 68 | Good | Good | 100 | 0.68 | No welding | - |
| | | | | 75 | 0.91 | No problem | 23.7 |
| | | | | 60 | 1.13 | No problem | 29.5 |
| | | | | 50 | 1.36 | No problem | 33.3 |
| Example 2 | 68 | Good | Good | 100 | 0.68 | No welding | - |
| | | | | 75 | 0.91 | No problem | 24.2 |
| | | | | 60 | 1.13 | No problem | 29 |
| | | | | 50 | 1.36 | No problem | 34.1 |
| Example 3 | 68 | Good | Good | 100 | 0.68 | No welding | - |
| | | | | 75 | 0.91 | No problem | 23.7 |
| | | | | 60 | 1.13 | No problem | 29.5 |
| | | | | 50 | 1.36 | No problem | 33.3 |
| Example 4 | 66 | Good | Good | 100 | 0.66 | No welding | - |
| | | | | 75 | 0.88 | No problem | 24.2 |
| | | | | 60 | 1.10 | No problem | 29 |
| | | | | 50 | 1.32 | No problem | 34.1 |

(continued)

| | (1) | (2) | (3) | (4) | | | (5) |
|---|---|---|---|---|---|---|---|
| | Transmittance test (%) | Heat resistance test | Light fastness test | Laser welding test | | | Tensile strength test |
| | | | | Scanning speed (mm/sec) | Surface heat (J/mm$^2$) | Welding state | Tensile strength (Mpa) |
| Example 5 | 65 | Good | Good | 100 | 0.65 | No welding | - |
| | | | | 75 | 0.87 | No problem | 24.2 |
| | | | | 60 | 1.08 | No problem | 29 |
| | | | | 50 | 1.30 | No problem | 34.1 |
| Comparative Example 1 | 60 | Unacceptable | Good | 100 | 0.60 | No welding | - |
| | | | | 75 | 0.80 | No problem | 23.4 |
| | | | | 60 | 1.00 | No problem | 26.2 |
| | | | | 50 | 1.20 | No problem | 31.8 |
| Comparative Example 2 | 60 | Unacceptable | Good | 100 | 0.60 | No welding | - |
| | | | | 75 | 0.80 | No problem | 23.4 |
| | | | | 60 | 1.00 | No problem | 26.2 |
| | | | | 50 | 1.20 | No problem | 31.8 |

Examples and Comparative Examples with fiber-reinforced polyamide 6 resin (GFPA6 resin)

Table 3

| | (1) | (2) | (3) | (4) | | | (5) |
|---|---|---|---|---|---|---|---|
| | Transmittance test (%) | Heat resistance test | Light fastness test | Laser welding test | | | Tensile strength test |
| | | | | Scanning speed (mm/sec) | Surface heat (J/mm$^2$) | Welding state | Tensile strength (Mpa) |
| GFPA6 resin | 69 | - | - | - | - | - | - |

(continued)

| | (1) | (2) | (3) | (4) | | | (5) |
|---|---|---|---|---|---|---|---|
| | Transmittance test (%) | Heat resistance test | Light fastness test | Laser welding test | | | Tensile strength test |
| | | | | Scanning speed (mm/sec) | Surface heat (J/mm$^2$) | Welding state | Tensile strength (Mpa) |
| Example 6 | 68 | Good | Good | 100 | 0.68 | No welding | - |
| | | | | 75 | 0.91 | No problem | 22.5 |
| | | | | 60 | 1.13 | No problem | 28.7 |
| | | | | 50 | 1.36 | No problem | 32.4 |
| Example 7 | 67 | Good | Good | 100 | 0.67 | No welding | - |
| | | | | 75 | 0.89 | No problem | 23.6 |
| | | | | 60 | 1.12 | No problem | 30.2 |
| | | | | 50 | 1.34 | No problem | 33.5 |
| Example 8 | 68 | Good | Good | 100 | 0.68 | No welding | - |
| | | | | 75 | 0.91 | No problem | 22.3 |
| | | | | 60 | 1.13 | No problem | 29.1 |
| | | | | 50 | 1.36 | No problem | 32.7 |
| Example 9 | 65 | Good | Good | 100 | 0.65 | No welding | - |
| | | | | 75 | 0.86 | No problem | 22.5 |
| | | | | 60 | 1.08 | No problem | 30 |
| | | | | 50 | 1.30 | No problem | 32.8 |
| Comparative Example 3 | 62 | Unacceptable | Good | 100 | 0.62 | No welding | - |
| | | | | 75 | 0.83 | No problem | 23.4 |
| | | | | 60 | 1.03 | No problem | 29.2 |
| | | | | 50 | 1.24 | No problem | 32 |

Examples and Comparative Examples with polybutylene terephthalate resin (PBT resin)

Table 4

| | (1) | (2) | (3) | (4) | | | (5) |
|---|---|---|---|---|---|---|---|
| | Transmittance test (%) | Heat resistance test | Light fastness test | Laser welding test | | | Tensile strength test |
| | | | | Scanning speed (mm/sec) | Surface heat (J/mm$^2$) | Welding state | Tensile strength (Mpa) |
| PBT resin | 37 | - | - | - | - | - | - |
| Example 10 | 32 | Good | Good | 30 | 1.07 | No welding | - |
| | | | | 20 | 1.60 | No welding | 13.7 |
| | | | | 15 | 2.13 | No problem | 16.5 |
| | | | | 10 | 3.20 | No problem | - |
| Example 11 | 34 | Good | Good | 30 | 1.13 | No welding | - |
| | | | | 20 | 1.69 | No welding | 15.2 |
| | | | | 15 | 2.25 | No problem | 16.9 |
| | | | | 10 | 3.42 | No problem | - |
| Comparative Example 4 | 32 | Unacceptable | Good | 30 | 1.07 | Combusted | - |
| | | | | 20 | 1.60 | No welding | 13.4 |
| | | | | 15 | 2.13 | No problem | 16.2 |
| | | | | 10 | 1.07 | No problem | 13.7 |
| Comparative Example 5 | 30 | Unacceptable | Good | 30 | 1.00 | Combusted | - |
| | | | | 20 | 1.50 | No welding | 13.4 |
| | | | | 15 | 2.00 | No problem | 16.2 |
| | | | | 10 | 3.00 | No problem | 13.7 |

Examples and Comparative Examples with fiber-reinforced polypropylene resin (GFPP resin)

Table 5

| | (1) | (2) | (3) | (4) | | | (5) |
|---|---|---|---|---|---|---|---|
| | Transmittance test (%) | Heat resistance test | Light fastness test | Laser welding test | | | Tensile strength test |
| | | | | Scanning speed (mm/sec) | Surface heat (J/mm$^2$) | Welding state | Tensile strength (Mpa) |
| GFPP resin | 48 | - | - | - | - | - | - |

(continued)

| | (1) | (2) | (3) | (4) | | | (5) |
|---|---|---|---|---|---|---|---|
| | Transmittance test (%) | Heat resistance test | Light fastness test | Laser welding test | | | Tensile strength test |
| | | | | Scanning speed (mm/sec) | Surface heat (J/mm$^2$) | Welding state | Tensile strength (Mpa) |
| Example 12 | 45 | Good | Good | 120 | 0.38 | No welding | - |
| | | | | 60 | 0.75 | No problem | 7.7 |
| | | | | 40 | 1.13 | No problem | 10.5 |
| | | | | 30 | 1.50 | No problem | 15.6 |
| Example 13 | 45 | Good | Good | 120 | 0.38 | No welding | - |
| | | | | 60 | 0.75 | No problem | 7.5 |
| | | | | 40 | 1.13 | No problem | 10.8 |
| | | | | 30 | 1.50 | No problem | 15.7 |
| Comparative Example 6 | 42 | Unacceptable | Good | 60 | 0.70 | No welding | - |
| | | | | 50 | 0.84 | No problem | 7.4 |
| | | | | 40 | 1.05 | No problem | 10.2 |
| | | | | 30 | 1.40 | No problem | 15.1 |

## Claims

1. A laser ray transmitting colored thermoplastic resin composition containing an anthrapyridone acid dye represented by formula (1) or (3) below:

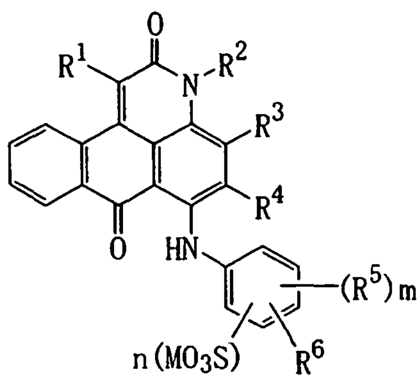

.... (1)

in formula (1),
$R^1$ represents hydrogen, an alkyl group having or not having a substituent, an alkylcarbonyl group having or not having a substituent, an arylcarbonyl group having or not having a substituent on the ring, or an alkoxycarbonyl group having or not having a substituent,
$R^2$ represents hydrogen, an alkyl group, an aryl group having or not having a substituent on the ring, an alkoxy group, an amino group, a hydroxyl group, or a halogen,
$R^3$ represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, $SO_3M$, an alkoxycarbonyl group, a cyclohexylamide group, or a group represented by formula (2);

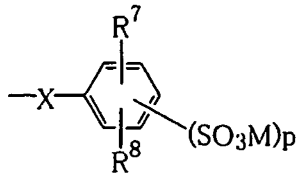

.... (2)

in formula (2),
X represents O, S or NH,
each of $R^7$ and $R^8$ independently represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, an alkoxycarbonyl group, or a cyclohexylamide group,
p represents 0 or 1,
M represents hydrogen, an alkali metal, or ammonium;
each of $R^4$ through $R^6$ independently represents hydrogen, an alkyl group, an alkoxy group, a halogen, or a hydroxyl group,
M represents hydrogen, an alkali metal, or ammonium,
each of m and n independently represents 1, 2 or 3.
provided that a plurality of $R^5$ units are present, they may be identical or not;
provided that a plurality of $SO_3M$ units are present, including $SO_3M$ in formula (2), the M units therein may be identical or not;

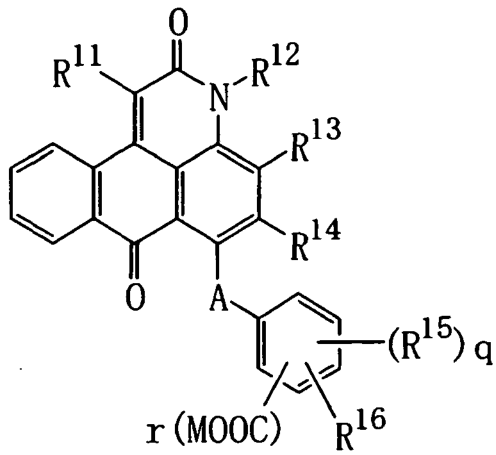

.... (3)

in formula (3),
$R^{11}$ represents hydrogen, an alkyl group having or not having a substituent, an alkylcarbonyl group having or not

having a substituent, an arylcarbonyl group having or not having a substituent on the ring, or an alkoxycarbonyl group having or not having a substituent,
$R^{12}$ represents hydrogen, an alkyl group, an aryl group having or not having a substituent on the ring, an alkoxy group, an amino group, a hydroxyl group, or a halogen,
$R^{13}$ represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, $SO_3M$, an alkoxycarbonyl group, a cyclohexylamide group, or a group represented by formula (4);

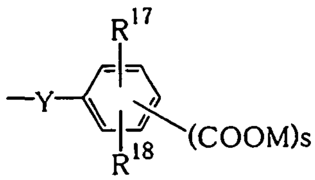

.... (4)

in formula (4),
Y represents O, S or NH,
each of $R^{17}$ and $R^{18}$ independently represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, $SO_3M$, an alkoxycarbonyl group, or a cyclohexylamide group,
s represents 0, 1 or 2,
M represents hydrogen, an alkali metal, or ammonium;
each of $R^{14}$ through $R^{16}$ independently represents hydrogen, an alkyl group, an alkoxy group, a halogen, or a hydroxyl group,
A represents O, S or NH,
M represents hydrogen, an alkali metal, or ammonium,
q represents 1, 2 or 3,
r represents 0, 1, 2 or 3;
provided that a plurality of $R^{15}$ units are present, they may be identical or not;
one or more COOM units are present in formula (3);
provided that a plurality of COOM units are present, including COOM in formula (4), the M units therein may be identical or not.

2. The laser ray transmitting colored thermoplastic resin composition of Claim 1, which contains an anthrapyridone acid dye represented by formula (1) above, and wherein 1 or 2 $SO_3M$ units are present in formula (1).

3. The laser ray transmitting colored thermoplastic resin composition of Claim 1, which contains an anthrapyridone acid dye represented by formula (3) above, and wherein r is 1 or 2 and 1 to 3 COOM units are present in formula (3).

4. The laser ray transmitting colored thermoplastic resin composition of Claim 1,
wherein said thermoplastic resin is a polyamide resin, a polyester resin, or a polyolefin resin.

5. The laser ray transmitting colored thermoplastic resin composition of Claim 1, which has a black color as it contains a green dye, as well as said anthrapyridone acid dye.

6. The laser ray transmitting colored thermoplastic resin composition of Claim 5, wherein said green dye is an anthraquinone green dye.

7. The laser ray transmitting colored thermoplastic resin composition of Claim 1, which has a black color as it contains a yellow dye and an anthraquinone blue dye, as well as said anthrapyridone acid dye.

8. The laser ray transmitting colored thermoplastic resin composition of Claim 1, wherein the laser transmittance at the oscillation wavelength of laser for resin welding is not less than 20%.

9. The laser ray transmitting colored thermoplastic resin composition of Claim 1, which contains a reinforcing glass fiber at 10 to 60% by weight.

10. The laser ray transmitting colored thermoplastic resin composition of Claim 1, which has been colored with a master batch containing said anthrapyridone acid dye.

11. The laser ray transmitting colored thermoplastic resin composition of Claim 10, wherein said master batch contains said anthrapyridone acid dye at 5 to 15% by weight to thermoplastic resin.

12. A method of laser welding wherein a contact portion of a laser ray transmitting material of the laser ray transmitting colored thermoplastic resin composition containing an anthrapyridone acid dye represented by formula (1) or (3) below and a laser absorbent material is welded by irradiating laser ray so that the laser ray transmitting material transmits the laser ray and the laser ray is absorbed in the laser absorbent material with the laser ray transmitting material and the laser absorbent material in contact with each other:

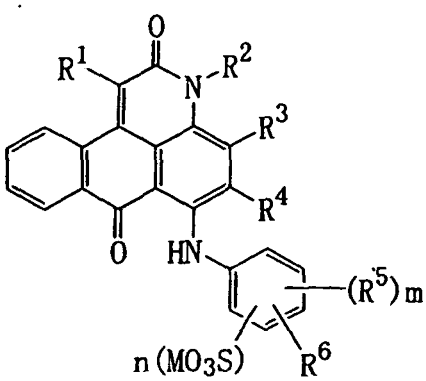

.... (1)

in formula (1),

$R^1$ represents hydrogen, an alkyl group having or not having a substituent, an alkylcarbonyl group having or not having a substituent, an arylcarbonyl group having or not having a substituent on the ring, or an alkoxycarbonyl group having or not having a substituent,

$R^2$ represents hydrogen, an alkyl group, an aryl group having or not having a substituent on the ring, an alkoxy group, an amino group, a hydroxyl group, or a halogen,

$R^3$ represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, $SO_3M$, an alkoxycarbonyl group, a cyclohexylamide group, or a group represented by formula (2);

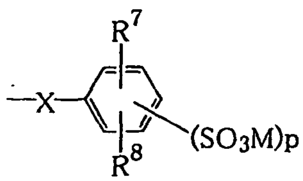

.... (2)

in formula (2),

X represents O, S or NH,

each of $R^7$ and $R^8$ independently represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, an alkoxycarbonyl group, or a cyclohexylamide group,
p represents 0 or 1,
M represents hydrogen, an alkali metal, or ammonium;
each of $R^4$ through $R^6$ independently represents hydrogen, an alkyl group, an alkoxy group, a halogen, or a hydroxyl group,
M represents hydrogen, an alkali metal, or ammonium,
each of m and n independently represents 1, 2 or 3.
provided that a plurality of $R^5$ units are present, they may be identical or not;
provided that a plurality of $SO_3M$ units are present, including $SO_3M$ in formula (2), the M units therein may be identical or not;

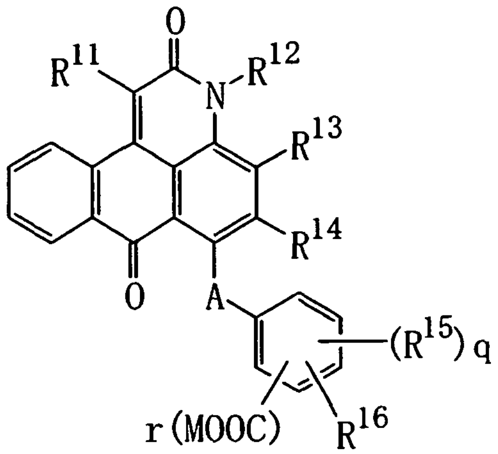

.... (3)

in formula (3),
$R^{11}$ represents hydrogen, an alkyl group having or not having a substituent, an alkylcarbonyl group having or not having a substituent, an arylcarbonyl group having or not having a substituent on the ring, or an alkoxycarbonyl group having or not having a substituent,
$R^{12}$ represents hydrogen, an alkyl group, an aryl group having or not having a substituent on the ring, an alkoxy group, an amino group, a hydroxyl group, or a halogen,
$R^{13}$ represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, $SO_3M$, an alkoxycarbonyl group, a cyclohexylamide group, or a group represented by formula (4);

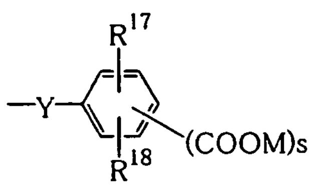

.... (4)

in formula (4),
Y represents O, S or NH,
each of $R^{17}$ and $R^{18}$ independently represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, $SO_3M$, an alkoxycarbonyl group, or a cyclohexylamide group,
s represents 0, 1 or 2,

M represents hydrogen, an alkali metal, or ammonium;
each of $R^{14}$ through $R^{16}$ independently represents hydrogen, an alkyl group, an alkoxy group, a halogen, or a hydroxyl group,
A represents O, S or NH,
M represents hydrogen, an alkali metal, or ammonium,
q represents 1, 2 or 3,
r represents 0, 1, 2 or 3;
provided that a plurality of $R^{15}$ units are present, they may be identical or not;
one or more COOM units are present in formula (3);
provided that a plurality of COOM units are present, including COOM in formula (4), the M units therein may be identical or not.

**13.** The method of laser welding of Claim 12, wherein said laser ray transmitting colored thermoplastic resin composition contains an anthrapyridone acid dye represented by formula (1) above, and wherein 1 or 2 $SO_3M$ units are present in formula (1).

**14.** The method of laser welding of Claim 12, wherein the thermoplastic resin in said laser ray transmitting colored thermoplastic resin composition is a polyamide resin, a polyester resin, or a polyolefin resin.

**15.** The method of laser welding of Claim 12, wherein said laser ray transmitting colored thermoplastic resin composition has a black color as it contains a green dye, as well as said anthrapyridone acid dye.

**16.** The method of laser welding of Claim 12, wherein said laser ray transmitting material and laser absorbent material both have a black color.

**17.** The method of laser welding of Claim 12, wherein said laser absorbent material comprises a laser-absorbing colored resin composition incorporating at least carbon black and/or a nigrosine dye as a colorant.

**18.** Use of an anthrapyridone acid dye represented by formula (1) or (3) below as a colorant for coloring a laser ray transmitting thermoplastic resin composition which forms a laser ray transmitting material used in a laser welding, said colorant being incorporated in said thermoplastic resin:

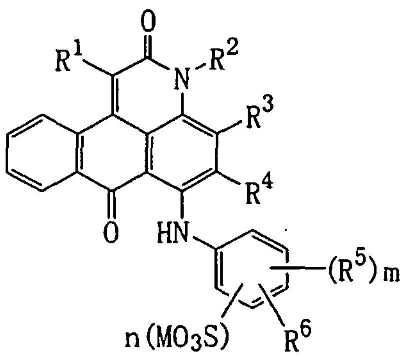

.... (1)

in formula (1),
$R^1$ represents hydrogen, an alkyl group having or not having a substituent, an alkylcarbonyl group having or not having a substituent, an arylcarbonyl group having or not having a substituent on the ring, or an alkoxycarbonyl group having or not having a substituent,
$R^2$ represents hydrogen, an alkyl group, an aryl group having or not having a substituent on the ring, an alkoxy group, an amino group, a hydroxyl group, or a halogen,
$R^3$ represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, $SO_3M$, an alkoxycarbonyl group, a cyclohexylamide group, or a group represented by formula (2);

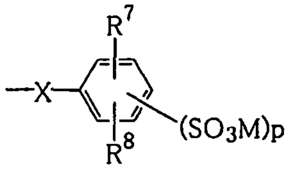

.... (2)

in formula (2),
X represents O, S or NH,
each of $R^7$ and $R^8$ independently represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, an alkoxycarbonyl group, or a cyclohexylamide group, p represents 0 or 1,
M represents hydrogen, an alkali metal, or ammonium;
each of $R^4$ through $R^6$ independently represents hydrogen, an alkyl group, an alkoxy group, a halogen, or a hydroxyl group,
M represents hydrogen, an alkali metal, or ammonium,
each of m and n independently represents 1, 2 or 3,
provided that a plurality of $R^5$ units are present, they may be identical or not;
provided that a plurality of $SO_3M$ units are present, including $SO_3M$ in formula (2), the M units therein may be identical or not;

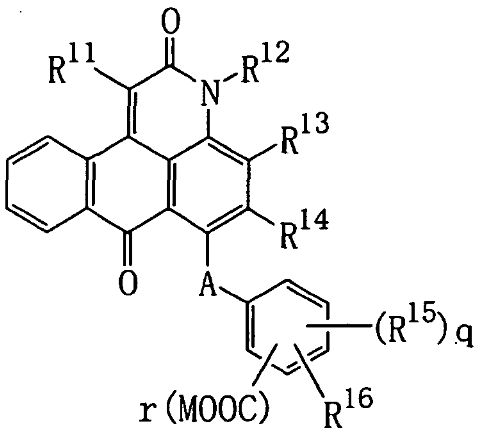

.... (3)

in formula (3),
$R^{11}$ represents hydrogen, an alkyl group having or not having a substituent, an alkylcarbonyl group having or not having a substituent, an arylcarbonyl group having or not having a substituent on the ring, or an alkoxycarbonyl group having or not having a substituent,
$R^{12}$ represents hydrogen, an alkyl group, an aryl group having or not having a substituent on the ring, an alkoxy group, an amino group, a hydroxyl group, or a halogen,
$R^{13}$ represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, $SO_3M$, an alkoxycarbonyl group, a cyclohexylamide group, or a group represented by formula (4);

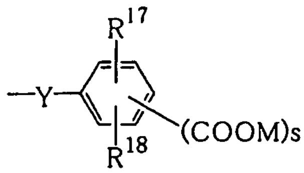

.... (4)

in formula (4),
Y represents O, S or NH,
each of $R^{17}$ and $R^{18}$ independently represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, $SO_3M$, an alkoxycarbonyl group, or a cyclohexylamide group,
s represents 0, 1 or 2,
M represents hydrogen, an alkali metal, or ammonium;
each of $R^{14}$ through $R^{16}$ independently represents hydrogen, an alkyl group, an alkoxy group, a halogen, or a hydroxyl group,
A represents O, S or NH,
M represents hydrogen, an alkali metal, or ammonium,
q represents 1, 2 or 3,
r represents 0, 1, 2 or 3;
provided that a plurality of $R^{15}$ units are present, they may be identical or not;
one or more COOM units are present in formula (3);
provided that a plurality of COOM units are present, including COOM in formula (4), the M units therein may be identical or not.

**19.** Use of Claim 18, wherein said anthrapyridone acid dye is represented by formula (1) having 1 or 2 $SO_3M$.

**20.** Use of Claim 18, wherein said anthrapyridone acid dye is represented by formula (3) having 1 to 3 COOM, r in the formula (3) being 1 or 2.

**21.** Use of Claim 18, wherein said thermoplastic resin is a polyamide resin, a polyester resin, or a polyolefin resin.

**22.** Use of Claim 18, wherein the laser transmittance of said laser ray transmitting thermoplastic resin composition colored with said anthrapyridone acid dye at the oscillation wavelength of laser for resin welding is not less than 20%.

**23.** Use of Claim 18, wherein said laser ray transmitting thermoplastic resin composition contains a reinforcing glass fiber at 10 to 60% by weight.

**24.** Use of a laser ray transmitting colored thermoplastic resin composition to form a laser ray transmitting material used in a laser welding, said composition containing an anthrapyridone acid dye represented by formula (1) or (3) below:

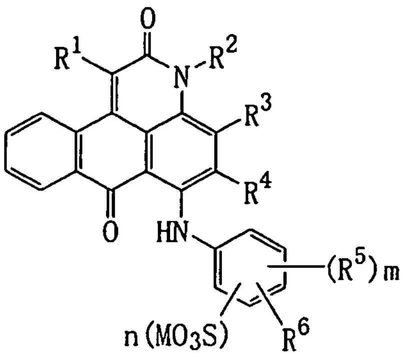

.... (1)

in formula (1),
$R^1$ represents hydrogen, an alkyl group having or not having a substituent, an alkylcarbonyl group having or not having a substituent, an arylcarbonyl group having or not having a substituent on the ring, or an alkoxycarbonyl group having or not having a substituent,
$R^2$ represents hydrogen, an alkyl group, an aryl group having or not having a substituent on the ring, an alkoxy group, an amino group, a hydroxyl group, or a halogen,
$R^3$ represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, $SO_3M$, an alkoxycarbonyl group, a cyclohexylamide group, or a group represented by formula (2);

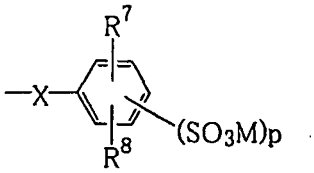

.... (2)

in formula (2),
X represents O, S or NH,
each of $R^7$ and $R^8$ independently represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, an alkoxycarbonyl group, or a cyclohexylamide group, p represents 0 or 1,
M represents hydrogen, an alkali metal, or ammonium;
each of $R^4$ through $R^6$ independently represents hydrogen, an alkyl group, an alkoxy group, a halogen, or a hydroxyl group,
M represents hydrogen, an alkali metal, or ammonium,
each of m and n independently represents 1, 2 or 3,
provided that a plurality of $R^5$ units are present, they may be identical or not;
provided that a plurality of $SO_3M$ units are present, including $SO_3M$ in formula (2), the M units therein may be identical or not;

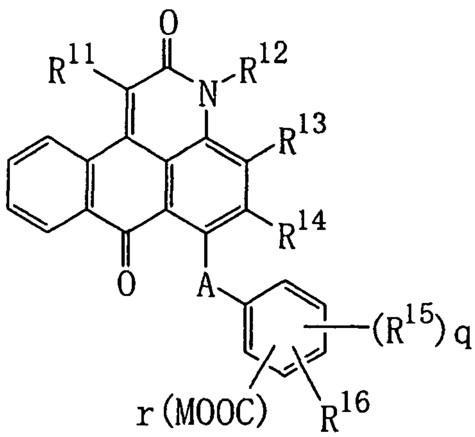

.... (3)

in formula (3),

$R^{11}$ represents hydrogen, an alkyl group having or not having a substituent, an alkylcarbonyl group having or not having a substituent, an arylcarbonyl group having or not having a substituent on the ring, or an alkoxycarbonyl group having or not having a substituent,

$R^{12}$ represents hydrogen, an alkyl group, an aryl group having or not having a substituent on the ring, an alkoxy group, an amino group, a hydroxyl group, or a halogen,

$R^{13}$ represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, COOM, $SO_3M$, an alkoxycarbonyl group, a cyclohexylamide group, or a group represented by formula (4);

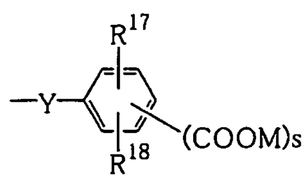

.... (4)

in formula (4),

Y represents O, S or NH,

each of $R^{17}$ and $R^{18}$ independently represents hydrogen, an alkyl group, an aryl group having or not having a substituent on the ring, an alkenyl group, an alkoxy group, an amino group, a hydroxyl group, a halogen, an acyl group, an acyloxy group, an acylamide group, an acyl-N-alkylamide group, $SO_3M$, an alkoxycarbonyl group, or a cyclohexylamide group,

s represents 0, 1 or 2,

M represents hydrogen, an alkali metal, or ammonium;

each of $R^{14}$ through $R^{16}$ independently represents hydrogen, an alkyl group, an alkoxy group, a halogen, or a hydroxyl group,

A represents O, S or NH,

M represents hydrogen, an alkali metal, or ammonium,

q represents 1, 2 or 3,

r represents 0, 1, 2 or 3;

provided that a plurality of $R^{15}$ units are present, they may be identical or not;

one or more COOM units are present in formula (3);

provided that a plurality of COOM units are present, including COOM in formula (4), the M units therein may be identical or not.

**Patentansprüche**

1. Laserstrahlung durchlassende, gefärbte, thermoplastische Harzzusammensetzung, die einen Anthrapyridonsäure-Farbstoff entsprechend der nachfolgenden Formel (1) oder entsprechend der nachfolgenden Formel (3) enthält:

**Formel (1)**

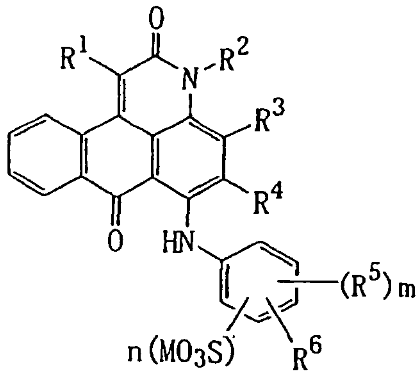

wobei in Formel (1):

$R^1$ steht für Wasserstoff, für eine substituierte oder unsubstituierte Alkylgruppe, für eine substituierte oder unsubstituierte Alkylcarbonylgruppe, für eine, am Ring substituierte oder unsubstiuierte Arylcarbonylgruppe, oder für eine substituierte oder unsubstituierte Alkoxycarbonylgruppe;
$R^2$ steht für Wasserstoff, für eine Alkylgruppe, für eine, am Ring substituierte oder unsubstituierte Arylgruppe, für eine Alkoxygruppe, für eine Aminogruppe, für eine Hydroxylgruppe oder für ein Halogen;
$R^3$ steht für Wasserstoff, für eine Alkylgruppe, für eine, am Ring substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe COOM, für die Gruppe $SO_3M$, für eine Alkoxycarbonylgruppe, für eine Cyclohexylamidgruppe oder für eine Gruppe entsprechend der nachstehenden Formel (2):

**Formel (2)**

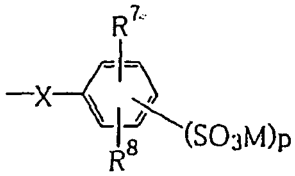

wobei in Formel (2):

X steht für O, S oder NH;
$R^7$ und $R^8$ stehen je - unabhängig voneinander - für Wasserstoff, für eine Alkylgruppe, für eine, am Ring

substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe COOM, für eine Alkoxycarbonylgruppe, oder für eine Cyclohexylamidgruppe;
p hat einen Wert von 0 oder 1;
M aus Formel (2) steht für Wasserstoff, für ein Alkalimetall oder für Ammonium;

ferner aus Formel (1):

$R^4$ bis $R^6$ stehen je - unabhängig voneinander - für Wasserstoff, für eine Alkylgruppe, für eine Alkoxygruppe, für ein Halogen oder für eine Hydroxylgruppe;
M steht für Wasserstoff, für ein Alkalimetall oder für Ammonium;
m und n haben je - unabhängig voneinander - einen Wert von 1, 2, oder 3;
sofern mehrere $R^5$ vorhanden sind, können diese gleich oder verschieden sein; und
sofern mehrere Gruppen $SO_3M$ vorhanden sind, einschließlich der Gruppe(n) $SO_3M$ aus Formel (2), kann hier jedes M gleich oder verschieden sein;

## Formel (3)

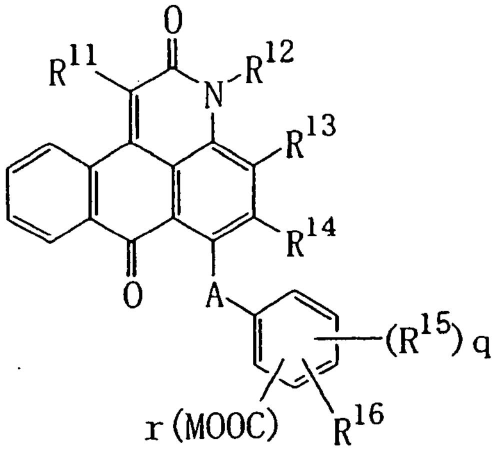

wobei in Formel (3):

$R^{11}$ steht für Wasserstoff, für eine substituierte oder unsubstituierte Alkylgruppe, für eine substituierte oder unsubstituierte Alkylcarbonylgruppe, für eine, am Ring substituierte oder unsubstiuierte Arylcarbonylgruppe, oder für eine substituierte oder unsubstituierte Alkoxycarbonylgruppe;
$R^{12}$ steht für Wasserstoff, für eine Alkylgruppe, für eine, am Ring substituierte oder unsubstituierte Arylgruppe, für eine Alkoxygruppe, für eine Aminogruppe, für eine Hydroxylgruppe oder für ein Halogen;
$R^{13}$ steht für Wasserstoff, für eine Alkylgruppe, für eine, am Ring substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe COOM, für die Gruppe $SO_3M$, für eine Alkoxycarbonylgruppe, für eine Cyclohexylamidgruppe oder für eine Gruppe entsprechend der nachstehenden Formel (4):

**Formel (4)**

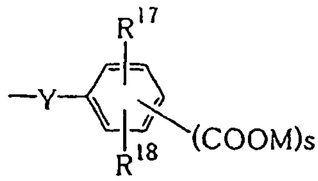

wobei in Formel (4):

Y steht für O, S oder NH;
$R^{17}$ und $R^{18}$ stehen je - unabhängig voneinander - für Wasserstoff, für eine Alkylgruppe, für eine, am Ring substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe $SO_3M$, für eine Alkoxycarbonylgruppe, oder für eine Cyclohexylamidgruppe;
s hat einen Wert von 0, 1 oder 2;
M aus Formel (4) steht für Wasserstoff, für ein Alkalimetall oder für Ammonium;

ferner aus Formel (3):

$R^{14}$ bis $R^{16}$ stehen je - unabhängig voneinander - für Wasserstoff, für eine Alkylgruppe, für eine Alkoxygruppe, für ein Halogen oder für eine Hydroxylgruppe;
A steht für O, S oder NH;
M steht für Wasserstoff, für ein Alkalimetall oder für Ammonium;
q hat einen Wert von 1, 2, oder 3;
r hat einen Wert von 0, 1, 2 oder 3;
sofern mehrere $R^{15}$ vorhanden sind, können diese gleich oder verschieden sein;
die Verbindung entsprechend Formel (3)
enthält eine oder mehrere Gruppe(n) COOM; und
sofern mehrere Gruppen COOM vorhanden sind, einschließlich der Gruppe(n) COOM aus Formel (4), kann hier jedes M gleich oder verschieden sein.

**2.** Laserstrahlung durchlassende, gefärbte, thermoplastische Harzzusammensetzung nach Anspruch 1, **dadurch gekennzeichnet, dass** diese Harzzusammensetzung einen Anthrapyridonsäure-Farbstoff entsprechend der obigen Formel (1) enthält; und der Anthrapyridonsäure-Farbstoff nach dieser Formel (1) eine oder zwei Gruppe(n) $SO_3M$ enthält.

**3.** Laserstrahlung durchlassende, gefärbte, thermoplastische Harzzusammensetzung nach Anspruch 1, **dadurch gekennzeichnet, dass** diese Harzzusammensetzung einen Anthrapyridonsäure-Farbstoff entsprechend der obigen Formel (3) enthält, wobei r einen Wert von 1 oder 2 hat; und der Anthrapyridonsäure-Farbstoff nach dieser Formel (3) eine bis drei Gruppe(n) COOM enthält.

**4.** Laserstrahlung durchlassende, gefärbte, thermoplastische Harzzusammensetzung nach Anspruch 1, **dadurch gekennzeichnet, dass** das thermoplastische Harz in dieser Laserstrahlung durchlassenden, gefärbten thermoplastischen Harzzusammensetzung ein Polyamidharz, ein Polyesterharz oder ein Polyolefinharz ist.

**5.** Laserstrahlung durchlassende, gefärbte, thermoplastische Harzzusammensetzung nach Anspruch 1, **dadurch gekennzeichnet, dass** diese Harzzusammensetzung eine schwarze Farbe aufweist, weil sie zusätzlich zu diesem Anthrapyridonsäure-Farbstoff einen grünen Farbstoff enthält.

6. Laserstrahlung durchlassende, gefärbte, thermoplastische Harzzusammensetzung nach Anspruch 5, **dadurch gekennzeichnet, dass** dieser grüne Farbstoff ein Anthrachinongrün-Farbstoff ist.

7. Laserstrahlung durchlassende, gefärbte, thermoplastische Harzzusammensetzung nach Anspruch 1, **dadurch gekennzeichnet, dass** diese Harzzusammensetzung eine schwarze Farbe aufweist, weil sie zusätzlich zu diesem Anthrapyridonsäure-Farbstoff einen gelben Farbstoff und einen Anthrachinonblau-Farbstoff enthält.

8. Laserstrahlung durchlassende, gefärbte, thermoplastische Harzzusammensetzung nach Anspruch 1, **dadurch gekennzeichnet, dass** die Durchlässigkeit der Harzzusammensetzung für Laserstrahlung bei der Schwingungswellenlänge der zum Laserschweißverfahren für Kunststoffe verwendeten Laserstrahlung nicht weniger als 20 % ausmacht.

9. Laserstrahlung durchlassende, gefärbte, thermoplastische Harzzusammensetzung nach Anspruch 1, **dadurch gekennzeichnet, dass** diese Harzzusammensetzung - bezogen auf das Gewicht an thermoplastischem Harz - 10 bis 60 Gew.-% verstärkende Glasfaser enthält.

10. Laserstrahlung durchlassende, gefärbte, thermoplastische Harzzusammensetzung nach Anspruch 1, **dadurch gekennzeichnet, dass** diese Harzzusammensetzung mit Hilfe einer Vormischung gefärbt worden ist, welche diesen Anthrapyridonsäure-Farbstoff enthält.

11. Laserstrahlung durchlassende, gefärbte, thermoplastische Harzzusammensetzung nach Anspruch 10, **dadurch gekennzeichnet, dass** diese Vormischung - bezogen auf das Gewicht an thermoplastischem Harz - diesen Anthrapyridonsäure-Farbstoff in einem Anteil von 5 bis 15 Gew.-% enthält.

12. Laserschweißverfahren, wobei ein Kontaktabschnitt aus einem Laserstrahlung durchlassenden Material, nämlich aus der Laserstrahlung durchlassenden, gefärbten, thermoplastischen Harzzusammensetzung, welche einen Anthrapyridonsäure-Farbstoff entsprechend der nachstehend angegebenen Formel (1) oder (3) enthält, mit einem Laserstrahlung absorbierenden Material verschweißt wird, wobei mit solcher Laserstrahlung bestrahlt wird, dass dieses, die Laserstrahlung durchlassende Material diese Laserstrahlung durchlässt, und dass die Laserstrahlung, in diesem die Laserstrahlung absorbierenden Material, absorbiert wird, wobei sich das, die Laserstrahlung durchlassende Material und das, die Laserstrahlung absorbierende Material gegenseitig kontaktieren:

## Formel (1)

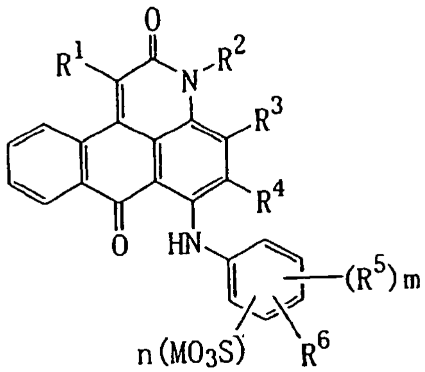

wobei in Formel (1):

$R^1$ steht für Wasserstoff, für eine substituierte oder unsubstituierte Alkylgruppe, für eine substituierte oder unsubstituierte Alkylcarbonylgruppe, für eine, am Ring substituierte oder unsubstiuierte Arylcarbonylgruppe, oder für eine substituierte oder unsubstituierte Alkoxycarbonylgruppe;
$R^2$ steht für Wasserstoff, für eine Alkylgruppe, für eine, am Ring substituierte oder unsubstituierte Arylgruppe, für eine Alkoxygruppe, für eine Aminogruppe, für eine Hydroxylgruppe oder für ein Halogen;
$R^3$ steht für Wasserstoff, für eine Alkylgruppe, für eine, am Ring substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe COOM, für die Gruppe $SO_3M$, für eine Alkoxycarbonylgruppe, für eine Cyclohexylamidgruppe oder für eine Gruppe entsprechend der nachstehenden Formel (2):

## Formel (2)

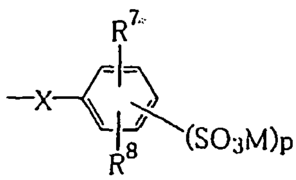

wobei in Formel (2):

X steht für O, S oder NH;
$R^7$ und $R^8$ stehen je - unabhängig voneinander - für Wasserstoff, für eine Alkylgruppe, für eine, am Ring substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe COOM, für eine Alkoxycarbonylgruppe, oder für eine Cyclohexylamidgruppe;
p hat einen Wert von 0 oder 1;
M aus Formel (2) steht für Wasserstoff, für ein Alkalimetall oder für Ammonium;

ferner aus Formel (1):

$R^4$ bis $R^6$ stehen je - unabhängig voneinander - für Wasserstoff, für eine Alkylgruppe, für eine Alkoxygruppe,

für ein Halogen oder für eine Hydroxylgruppe;
M steht für Wasserstoff, für ein Alkalimetall oder für Ammonium;
m und n haben je - unabhängig voneinander - einen Wert von 1, 2, oder 3;
sofern mehrere $R^5$ vorhanden sind, können diese gleich oder verschieden sein; und
sofern mehrere Gruppen $SO_3M$ vorhanden sind, einschließlich der Gruppe(n) $SO_3M$ aus Formel (2), kann hier jedes M gleich oder verschieden sein;

## Formel (3)

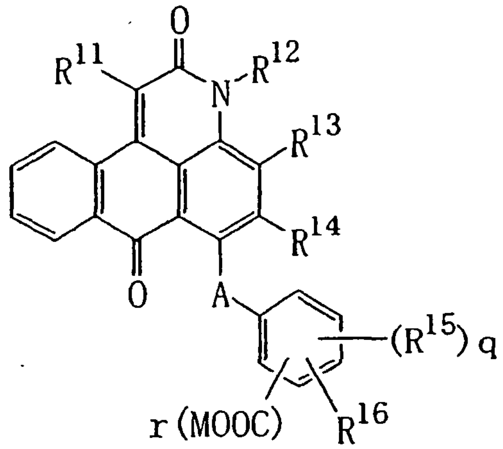

wobei in Formel (3):

$R^{11}$ steht für Wasserstoff, für eine substituierte oder unsubstituierte Alkylgruppe, für eine substituierte oder unsubstituierte Alkylcarbonylgruppe, für eine, am Ring substituierte oder unsubstiuierte Arylcarbonylgruppe, oder für eine substituierte oder unsubstituierte Alkoxycarbonylgruppe;
$R^{12}$ steht für Wasserstoff, für eine Alkylgruppe, für eine, am Ring substituierte oder unsubstituierte Arylgruppe, für eine Alkoxygruppe, für eine Aminogruppe, für eine Hydroxylgruppe oder für ein Halogen;
$R^{13}$ steht für Wasserstoff, für eine Alkylgruppe, für eine, am Ring substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe COOM, für die Gruppe $SO_3M$, für eine Alkoxycarbonylgruppe, für eine Cyclohexylamidgruppe oder für eine Gruppe entsprechend der nachstehenden Formel (4):

## Formel (4)

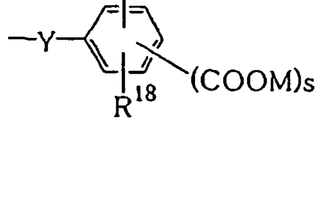

wobei in Formel (4):

Y steht für O, S oder NH;
$R^{17}$ und $R^{18}$ stehen je - unabhängig voneinander - für Wasserstoff, für eine Alkylgruppe, für eine, am Ring

substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe $SO_3M$, für eine Alkoxycarbonylgruppe, oder für eine Cyclohexylamidgruppe;
s hat einen Wert von 0, 1 oder 2;
M aus Formel (4) steht für Wasserstoff, für ein Alkalimetall oder für Ammonium;

ferner aus Formel (3):

$R^{14}$ bis $R^{16}$ stehen je - unabhängig voneinander - für Wasserstoff, für eine Alkylgruppe, für eine Alkoxygruppe, für ein Halogen oder für eine Hydroxylgruppe;
A steht für O, S oder NH;
M steht für Wasserstoff, für ein Alkalimetall oder für Ammonium;
q hat einen Wert von 1, 2, oder 3;
r hat einen Wert von 0, 1, 2 oder 3;
sofern mehrere $R^{15}$ vorhanden sind, können diese gleich oder verschieden sein;
die Verbindung entsprechend Formel (3)
enthält eine oder mehrere Gruppe(n) COOM; und
sofern mehrere Gruppen COOM vorhanden sind, einschließlich der Gruppe(n) COOM aus Formel (4), kann hier jedes M gleich oder verschieden sein.

**13.** Laserschweißverfahren nach Anspruch 12,
**dadurch gekennzeichnet, dass**
diese, die Laserstrahlung durchlassende, gefärbte, thermoplastische Harzzusammensetzung einen Anthrapyridonsäure-Farbstoff entsprechend der obigen Formel (1) enthält,
wobei der Anthrapyridonsäure-Farbstoff entsprechend dieser Formel (1) eine oder zwei Gruppe(n) $SO_3M$ enthält.

**14.** Laserschweißverfahren nach Anspruch 12,
**dadurch gekennzeichnet, dass**
das thermoplastische Harz in dieser, die Laserstrahlung durchlassenden, gefärbten, thermoplastischen Harzzusammensetzung ein Polyamidharz, ein Polyesterharz oder ein Polyolefinharz ist.

**15.** Laserschweißverfahren nach Anspruch 12,
**dadurch gekennzeichnet, dass**
diese, die Laserstrahlung durchlassende, gefärbte, thermoplastische Harzzusammensetzung eine schwarze Farbe aufweist, weil sie zusätzlich zu diesem Anthrapyridonsäure-Farbstoff einen grünen Farbstoff enthält.

**16.** Laserschweißverfahren nach Anspruch 12,
**dadurch gekennzeichnet, dass**
beide, sowohl dieses, die Laserstrahlung durchlassende Material, wie dieses, die Laserstrahlung absorbierende Material, eine schwarze Farbe aufweisen.

**17.** Laserschweißverfahren nach Anspruch 12,
**dadurch gekennzeichnet, dass**
dieses, die Laserstrahlung absorbierende Material eine Laserstrahlung absorbierende, gefärbte Harzzusammensetzung aufweist, die als Färbemittel wenigstens Ruß und/oder einen Nigrosin-Farbstoff enthält.

**18.** Verwendung
eines Anthrapyridonsäure-Farbstoffs entsprechend der nachstehenden Formel (1) oder (3)
als ein Färbemittel zum Färben einer Laserstrahlung durchlassenden thermoplastischen Harzzusammensetzung, die ein, für ein Laserschweißverfahren geeignetes, Laserstrahlung durchlassendes Material bildet,
wobei dieses Färbemittel in dieses thermoplastische Harz eingearbeitet ist:

## Formel (1)

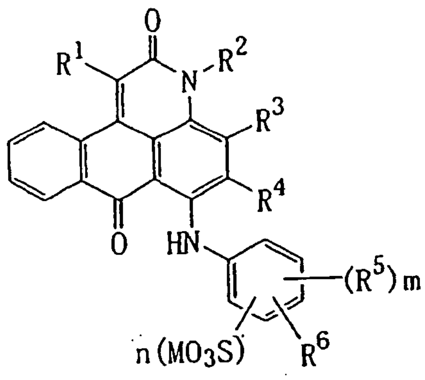

wobei in Formel (1):

$R^1$ steht für Wasserstoff, für eine substituierte oder unsubstituierte Alkylgruppe, für eine substituierte oder unsubstituierte Alkylcarbonylgruppe, für eine, am Ring substituierte oder unsubstiuierte Arylcarbonylgruppe, oder für eine substituierte oder unsubstituierte Alkoxycarbonylgruppe;
$R^2$ steht für Wasserstoff, für eine Alkylgruppe, für eine, am Ring substituierte oder unsubstituierte Arylgruppe, für eine Alkoxygruppe, für eine Aminogruppe, für eine Hydroxylgruppe oder für ein Halogen;
$R^3$ steht für Wasserstoff, für eine Alkylgruppe, für eine, am Ring substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe COOM, für die Gruppe $SO_3M$, für eine Alkoxycarbonylgruppe, für eine Cyclohexylamidgruppe oder für eine Gruppe entsprechend der nachstehenden Formel (2):

## Formel (2)

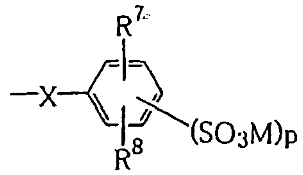

wobei in Formel (2):

X steht für O, S oder NH;
$R^7$ und $R^8$ stehen je - unabhängig voneinander - für Wasserstoff, für eine Alkylgruppe, für eine, am Ring substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe COOM, für eine Alkoxycarbonylgruppe, oder für eine Cyclohexylamidgruppe;
p hat einen Wert von 0 oder 1;
M aus Formel (2) steht für Wasserstoff, für ein Alkalimetall oder für Ammonium;

ferner aus Formel (1):

$R^4$ bis $R^6$ stehen je - unabhängig voneinander - für Wasserstoff, für eine Alkylgruppe, für eine Alkoxygruppe, für ein Halogen oder für eine Hydroxylgruppe;
M steht für Wasserstoff, für ein Alkalimetall oder für Ammonium;
m und n haben je - unabhängig voneinander - einen Wert von 1, 2, oder 3;
sofern mehrere $R^5$ vorhanden sind, können diese gleich oder verschieden sein; und
sofern mehrere Gruppen $SO_3M$ vorhanden sind, einschließlich der Gruppe(n) $SO_3M$ aus Formel (2), kann hier jedes M gleich oder verschieden sein;

## Formel (3)

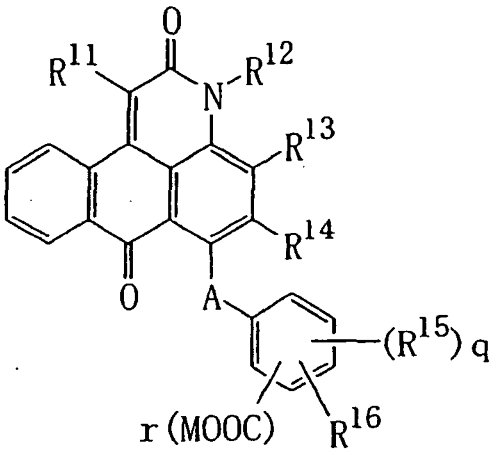

wobei in Formel (3):

$R^{11}$ steht für Wasserstoff, für eine substituierte oder unsubstituierte Alkylgruppe, für eine substituierte oder unsubstituierte Alkylcarbonylgruppe, für eine, am Ring substituierte oder unsubstiuierte Arylcarbonylgruppe, oder für eine substituierte oder unsubstituierte Alkoxycarbonylgruppe;
$R^{12}$ steht für Wasserstoff, für eine Alkylgruppe, für eine, am Ring substituierte oder unsubstituierte Arylgruppe, für eine Alkoxygruppe, für eine Aminogruppe, für eine Hydroxylgruppe oder für ein Halogen;
$R^{13}$ steht für Wasserstoff, für eine Alkylgruppe, für eine, am Ring substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe COOM, für die Gruppe $SO_3M$, für eine Alkoxycarbonylgruppe, für eine Cyclohexylamidgruppe oder für eine Gruppe entsprechend der nachstehenden Formel (4):

## Formel (4)

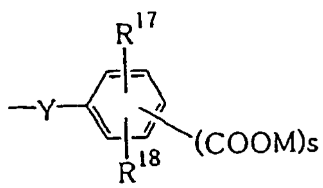

wobei in Formel (4):

Y steht für O, S oder NH;
$R^{17}$ und $R^{18}$ stehen je - unabhängig voneinander - für Wasserstoff, für eine Alkylgruppe, für eine, am Ring substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe $SO_3M$, für eine Alkoxycarbonylgruppe, oder für eine Cyclohexylamidgruppe;
s hat einen Wert von 0, 1 oder 2;
M aus Formel (4) steht für Wasserstoff, für ein Alkalimetall oder für Ammonium;

ferner aus Formel (3):

$R^{14}$ bis $R^{16}$ stehen je - unabhängig voneinander - für Wasserstoff, für eine Alkylgruppe, für eine Alkoxygruppe, für ein Halogen oder für eine Hydroxylgruppe;
A steht für O, S oder NH;
M steht für Wasserstoff, für ein Alkalimetall oder für Ammonium;
q hat einen Wert von 1, 2, oder 3;
r hat einen Wert von 0, 1, 2 oder 3;
sofern mehrere $R^{15}$ vorhanden sind, können diese gleich oder verschieden sein;
die Verbindung entsprechend Formel (3)
enthält eine oder mehrere Gruppe(n) COOM; und
sofern mehrere Gruppen COOM vorhanden sind, einschließlich der Gruppe(n) COOM aus Formel (4), kann hier jedes M gleich oder verschieden sein.

**19.** Verwendung nach Anspruch 18,
**dadurch gekennzeichnet, dass**
dieser Anthrapyridonsäure-Farbstoff entsprechend der Formel (1) eine oder zwei Gruppe(n) $SO_3M$ enthält.

**20.** Verwendung nach Anspruch 18,
**dadurch gekennzeichnet, dass**
ein Anthrapyridonsäure-Farbstoff entsprechend der Formel (3) verwendet wird,
wobei r in dieser Formel (3) einen Wert von 1 oder 2 hat; und
der Farbstoff entsprechend dieser Formel (3) eine bis drei Gruppe(n) COOM enthält.

**21.** Verwendung nach Anspruch 18,
**dadurch gekennzeichnet, dass**
das thermoplastische Harz in dieser Laserstrahlung durchlassenden, gefärbten, thermoplastischen Harzzusammensetzung ein Polyamidharz, ein Polyesterharz oder ein Polyolefinharz ist.

**22.** Verwendung nach Anspruch 18,
**dadurch gekennzeichnet, dass**
die Durchlässigkeit dieser, Laserstrahlung durchlassenden, thermoplastischen Harzzusammensetzung,
die mit diesem Anthrapyridonsäure-Farbstoff gefärbt ist,
für Laserstrahlung bei der zum Laserschweißverfahren für Kunststoffe benutzten Schwingungswellenlänge nicht weniger als 20 % ausmacht.

**23.** Verwendung nach Anspruch 18,
**dadurch gekennzeichnet, dass**
diese, die Laserstrahlung durchlassende, thermoplastische Harzzusammensetzung
- bezogen auf das Gewicht an thermoplastischem Harz -
10 bis 60 Gew.-% verstärkende Glasfaser enthält.

**24.** Verwendung
einer, Laserstrahlung durchlassenden, gefärbten, thermoplastischen Harzzusammensetzung
zur Erzeugung eines, für ein Laserschweißverfahren geeigneten, Laserstrahlung durchlassenden Materials,
wobei diese Harzzusammensetzung einen Anthrapyridonsäure-Farbstoff entsprechend der nachstehenden Formel (1) oder (3) enthält:

## Formel (1)

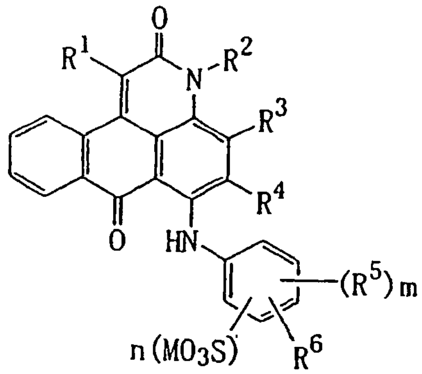

wobei in Formel (1):

$R^1$ steht für Wasserstoff, für eine substituierte oder unsubstituierte Alkylgruppe, für eine substituierte oder unsubstituierte Alkylcarbonylgruppe, für eine, am Ring substituierte oder unsubstiuierte Arylcarbonylgruppe, oder für eine substituierte oder unsubstituierte Alkoxycarbonylgruppe;
$R^2$ steht für Wasserstoff, für eine Alkylgruppe, für eine, am Ring substituierte oder unsubstituierte Arylgruppe, für eine Alkoxygruppe, für eine Aminogruppe, für eine Hydroxylgruppe oder für ein Halogen;
$R^3$ steht für Wasserstoff, für eine Alkylgruppe, für eine, am Ring substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe COOM, für die Gruppe $SO_3M$, für eine Alkoxycarbonylgruppe, für eine Cyclohexylamidgruppe oder für eine Gruppe entsprechend der nachstehenden Formel (2):

## Formel (2)

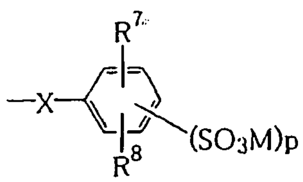

wobei in Formel (2):

X steht für O, S oder NH;
$R^7$ und $R^8$ stehen je - unabhängig voneinander - für Wasserstoff, für eine Alkylgruppe, für eine, am Ring substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe COOM, für eine Alkoxycarbonylgruppe, oder für eine Cyclohexylamidgruppe;
p hat einen Wert von 0 oder 1;
M aus Formel (2) steht für Wasserstoff, für ein Alkalimetall oder für Ammonium;

ferner aus Formel (1):

$R^4$ bis $R^6$ stehen je - unabhängig voneinander - für Wasserstoff, für eine Alkylgruppe, für eine Alkoxygruppe, für ein Halogen oder für eine Hydroxylgruppe;
M steht für Wasserstoff, für ein Alkalimetall oder für Ammonium;
m und n haben je - unabhängig voneinander - einen Wert von 1, 2, oder 3;
sofern mehrere $R^5$ vorhanden sind, können diese gleich oder verschieden sein; und
sofern mehrere Gruppen $SO_3M$ vorhanden sind, einschließlich der Gruppe(n) $SO_3M$ aus Formel (2), kann hier jedes M gleich oder verschieden sein;

## Formel (3)

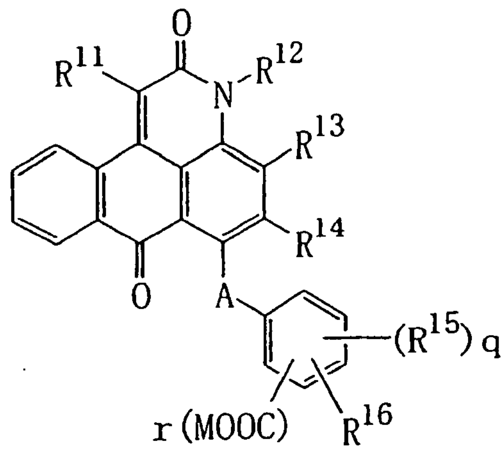

wobei in Formel (3):

$R^{11}$ steht für Wasserstoff, für eine substituierte oder unsubstituierte Alkylgruppe, für eine substituierte oder unsubstituierte Alkylcarbonylgruppe, für eine, am Ring substituierte oder unsubstiuierte Arylcarbonylgruppe, oder für eine substituierte oder unsubstituierte Alkoxycarbonylgruppe;
$R^{12}$ steht für Wasserstoff, für eine Alkylgruppe, für eine, am Ring substituierte oder unsubstituierte Arylgruppe, für eine Alkoxygruppe, für eine Aminogruppe, für eine Hydroxylgruppe oder für ein Halogen;
$R^{13}$ steht für Wasserstoff, für eine Alkylgruppe, für eine, am Ring substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe COOM, für die Gruppe $SO_3M$, für eine Alkoxycarbonylgruppe, für eine Cyclohexylamidgruppe oder für eine Gruppe entsprechend der nachstehenden Formel (4):

## Formel (4)

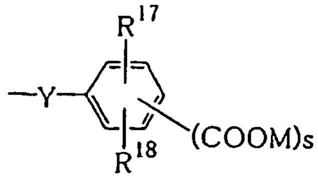

wobei in Formel (4):

Y steht für O, S oder NH;
$R^{17}$ und $R^{18}$ stehen je - unabhängig voneinander - für Wasserstoff, für eine Alkylgruppe, für eine, am Ring substituierte oder unsubstituierte Arylgruppe, für eine Alkenylgruppe, für eine Alkoxygruppe, für eine Aminogruppe, für eine Hydroxylgruppe, für ein Halogen, für eine Acylgruppe, für eine Acyloxygruppe, für eine Acylamidgruppe, für eine Acyl-N-alkylamid-Gruppe, für die Gruppe $SO_3M$, für eine Alkoxycarbonylgruppe, oder für eine Cyclohexylamidgruppe;
s hat einen Wert von 0, 1 oder 2;
M aus Formel (4) steht für Wasserstoff, für ein Alkalimetall oder für Ammonium;

ferner aus Formel (3):

$R^{14}$ bis $R^{16}$ stehen je - unabhängig voneinander - für Wasserstoff, für eine Alkylgruppe, für eine Alkoxygruppe, für ein Halogen oder für eine Hydroxylgruppe;
A steht für O, S oder NH;
M steht für Wasserstoff, für ein Alkalimetall oder für Ammonium;
q hat einen Wert von 1, 2, oder 3;
r hat einen Wert von 0, 1, 2 oder 3;
sofern mehrere $R^{15}$ vorhanden sind, können diese gleich oder verschieden sein;
die Verbindung entsprechend Formel (3)
enthält eine oder mehrere Gruppe(n) COOM; und
sofern mehrere Gruppen COOM vorhanden sind, einschließlich der Gruppe(n) COOM aus Formel (4), kann hier jedes M gleich oder verschieden sein.

## Revendications

1. Composition de résine thermoplastique colorée transmettant un faisceau laser contenant un colorant acide à l'anthrapyridone, représentée par la formule (1) ou (3) ci-dessous.

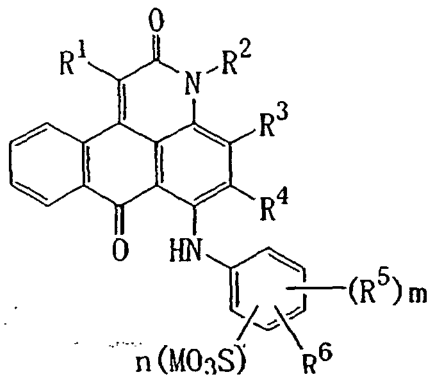

dans la formule (1)

$R^1$ représente l'hydrogène, un groupe alkyle avec ou sans substituant, un groupe alkylecarbonyle avec ou sans substituant, un groupe arylecarbonyle avec ou sans substituant sur le cycle, ou un groupe alkoxycarbonyle avec ou sans substituant,
$R^2$ représente l'hydrogène, un groupe alkyle, un groupe aryle avec ou sans substituant sur le cycle, un groupe alkoxy, un groupe amino, un groupe hydroxyle, ou un halogène,
$R^3$ représente un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, $SO_3M$, un groupe alkoxycarbonyle, un groupe cyclohexylamide, ou un groupe représenté par la formule (2) ;

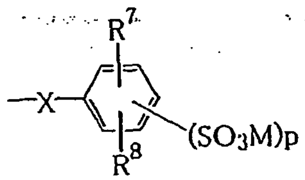

Dans la formule (2),

X représente O, S ou NH,
$R^7$ et $R^8$ représentent chacun indépendamment un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, un groupe alkoxycarbonyle ou un groupe cyclohexylamide, p représente 0 ou 1
M représente l'hydrogène, un métal alcalin, ou de l'ammonium ;
$R^4$ à $R^6$ représentent chacun indépendamment l'hydrogène, un groupe alkyle, un groupe alkoxyle, un halogène ou un groupe hydroxyle,
M représente l'hydrogène, un métal alcalin, ou de l'ammonium,
m et n représentent chacun indépendamment 1, 2 ou 3.
dans la mesure où une pluralité d'unités $R^5$ sont présentes, elles peuvent être identiques ou non ;
dans la mesure où une pluralité d'unités $SO_3M$ sont présentes, y compris $SO_3M$ dans la formule (2), les unités M dans celle-ci peuvent être identiques ou non ; ]

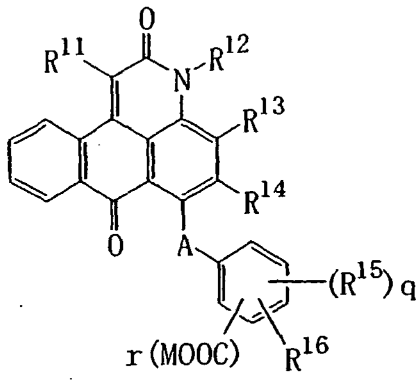

Dans la formule (3),

$R^{11}$ représente l'hydrogène, un groupe alkyle avec ou sans substituant, un groupe alkylecarbonyle avec ou sans substituant, un groupe arylecarbonyle avec ou sans substituant sur le cycle, ou un groupe alkoxycarbonyle avec ou sans substituant,
$R^{12}$ représente l'hydrogène, un groupe alkyle, un groupe aryle avec ou sans substituant sur le cycle,_un groupe alkoxy, un groupe amino, un groupe hydroxyle, ou un halogène,
$R^{13}$ représente un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, $SO_3M$, un groupe alkoxycarbonyle, un groupe cyclohexylamide, ou un groupe représenté par la formule (4) ;

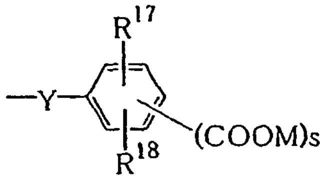

Dans la formule (4)

Y représente O, S ou NH,
$R^{17}$ et $R^{18}$ représentent chacun indépendamment un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, un groupe alkoxycarbonyle ou un groupe cyclohexylamide,
s représente 0, 1 ou 2
M représente l'hydrogène, un métal alcalin, ou de l'ammonium ;
$R^{14}$ à $R^{16}$ représentent chacun indépendamment l'hydrogène, un groupe alkyle, un groupe alkoxyle, un halogène ou un groupe hydroxyle,
A représente O, S ou NH,
M représente l'hydrogène, un métal alcalin, ou de l'ammonium,
q représente 1, 2 ou 3,
r représente 0, 1, 2 ou 3.
dans la mesure où une pluralité d'unités $R^{15}$ sont présentes elles peuvent être identiques ou non ;
une ou plusieurs unités COOM sont présentes dans la formule (3) ;
dans la mesure où une pluralité d'unités COOM sont présentes, y compris COOM dans la formule (4), les unités M de celle-ci peuvent être identiques ou non.

**2.** Composition de résine thermoplastique colorée transmettant un faisceau laser selon la Revendication 1, contenant un colorant acide à l'anthrapyridone représenté par la formule (1) ci-dessus, et dans lequel 1 ou 2 unités $SO_3M$ sont présentes dans la formule (1).

**3.** Composition de résine thermoplastique colorée transmettant un faisceau laser selon la Revendication 1, contenant un colorant acide à l'anthrapyridone représenté par la formule (3) ci-dessus, et dans laquelle r est 1 ou 2 et de 1 à 3 unités COOM sont présentes dans la formule (3).

**4.** Composition de résine thermoplastique colorée transmettant un faisceau laser selon la Revendication 1, dans laquelle ladite résine thermoplastique est une résine polyamide, une résine polyester ou une résine polyoléfine.

**5.** Composition de résine thermoplastique colorée transmettant un faisceau laser selon la Revendication 1, de couleur noire étant donné qu'elle contient un colorant vert, ainsi que ledit colorant acide à l'anthrapyridone.

**6.** Composition de résine thermoplastique colorée transmettant un faisceau laser selon la Revendication 5, dans laquelle ledit colorant vert est un colorant vert à l'anthraquinone.

**7.** Composition de résine thermoplastique colorée transmettant un faisceau laser selon la Revendication 1, de couleur noire étant donné qu'elle contient un colorant jaune et un colorant bleu à l'anthraquinone, ainsi que ledit colorant acide à l'anthrapyridone.

**8.** Composition de résine thermoplastique colorée transmettant un faisceau laser selon la Revendication 1, dans laquelle le facteur de transmission laser à la longueur d'onde de l'oscillation du laser pour le soudage de la résine n'est pas inférieur à 20 %.

**9.** Composition de résine thermoplastique colorée transmettant un faisceau laser selon la Revendication 1, contenant de la fibre de verre de renforcement à entre 10 et 60 % en poids.

**10.** Composition de résine thermoplastique colorée transmettant un faisceau laser selon la Revendication 1, ayant été colorée avec un mélange maître contenant ledit colorant acide à l'anthrapyridone.

**11.** Composition de résine thermoplastique colorée transmettant un faisceau laser selon la Revendication 10, dans laquelle ledit mélange maître contient ledit colorant acide à l'anthrapyridone à entre 5 et 10 % en poids par rapport à la résine thermoplastique.

**12.** Procédé de soudage au laser dans lequel une portion de contact d'une matière transmettant le faisceau laser de la composition de résine thermoplastique colorée transmettant un faisceau laser contenant un colorant acide à l'anthrapyridone représenté par la formule (1) ou (3) ci-dessous et une matière absorbant le laser, est irradiée par irradiation du faisceau laser, de sorte que la matière transmettant le laser transmette le faisceau laser, et que la faisceau laser soit absorbé par la matière absorbant le laser, la matière transmettant le faisceau laser et la matière absorbant le laser étant en contact l'une avec l'autre :

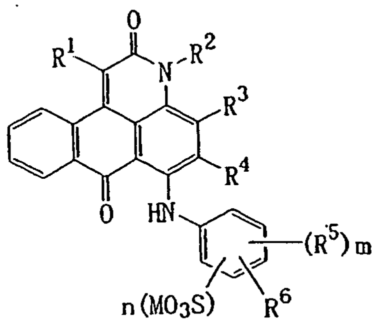

Dans la formule (1),

$R^1$ représente l'hydrogène, un groupe alkyle avec ou sans substituant, un groupe alkylecarbonyle avec ou sans substituant, un groupe arylecarbonyle avec ou sans substituant sur le cycle, ou un groupe alkoxycarbonyle avec ou sans substituant,
$R^2$ représente l'hydrogène, un groupe alkyle, un groupe aryle avec ou sans substituant sur le cycle, un groupe alkoxy, un groupe amino, un groupe hydroxyle, ou un halogène,
$R^3$ représente un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, $SO_3M$, un groupe alkoxycarbonyle, un groupe cyclohexylamide, ou un groupe représenté par la formule (2) ;

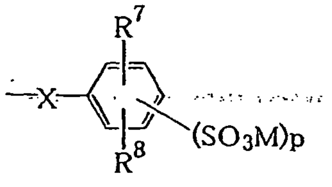

Dans la formule (2),

X représente O, S ou NH,
$R^7$ et $R^8$ représentent chacun indépendamment un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, un groupe alkoxycarbonyle ou un groupe cyclohexylamide,
p représente 0 ou 1
M représente l'hydrogène, un métal alcalin, ou de l'ammonium ;
$R^4$ à $R^6$ représentent chacun indépendamment l'hydrogène, un groupe alkyle, un groupe alkoxyle, un halogène ou un groupe hydroxyle,
M représente l'hydrogène, un métal alcalin, ou de l'ammonium,
m et n représentent chacun indépendamment 1, 2 ou 3.
dans la mesure où une pluralité d'unités $R^5$ sont présentes, elles peuvent être identiques ou non ;

dans la mesure où une pluralité d'unités $SO_3M$ sont présentes, y compris $SO_3M$ dans la formule (2), les unités M dans celle-ci peuvent être identiques ou non ;]

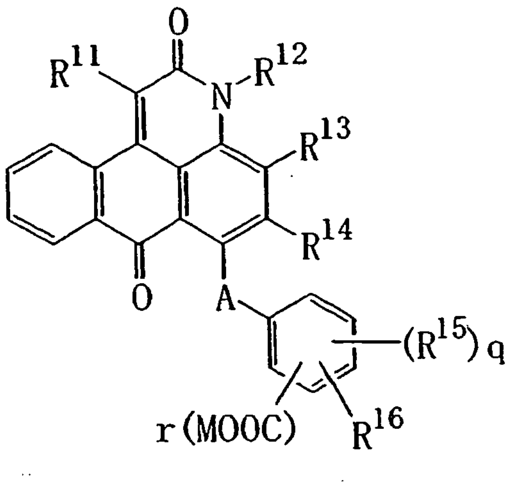

Dans la formule (3),

$R^{11}$ représente l'hydrogène, un groupe alkyle avec ou sans substituant, un groupe alkylecarbonyle avec ou sans substituant, un groupe arylecarbonyle avec ou sans substituant sur le cycle, ou un groupe alkoxycarbonyle avec ou sans substituant,
$R^{12}$ représente l'hydrogène, un groupe alkyle, un groupe aryle avec ou sans substituant sur le cycle, un groupe alkoxy, un groupe amino, un groupe hydroxyle, ou un halogène,
$R^{13}$ représente un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, $SO_3M$, un groupe alkoxycarbonyle, un groupe cyclohexylamide, ou un groupe représenté par la formule (4) ;

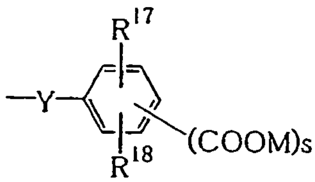

dans la formule (4)

Y représente O, S ou NH,
$R^{17}$ et $R^{18}$ représentent chacun indépendamment un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, un groupe alkoxycarbonyle ou un groupe cyclohexylamide,
s représente 0, 1 ou 2
M représente l'hydrogène, un métal alcalin, ou de l'ammonium ;
$R^{14}$ à $R^{16}$ représentent chacun indépendamment l'hydrogène, un groupe alkyle, un groupe alkoxyle, un halogène ou un groupe hydroxyle,
A représente O, S ou NH,
M représente l'hydrogène, un métal alcalin, ou de l'ammonium,
q représente 1, 2 ou 3,
r représente 0, 1, 2 ou 3.
dans la mesure où une pluralité d'unités $R^{15}$ sont présentes elles peuvent être identiques ou non ;
une ou plusieurs unités COOM sont présentes dans la formule (3) ;

dans la mesure où une pluralité d'unités COOM sont présentes, y compris COOM dans la formule (4), les unités M de celle-ci peuvent être identiques ou non.

**13.** Procédé de soudage au laser selon la Revendication 12, dans lequel ladite composition de résine thermoplastique colorée transmettant un faisceau laser contient un colorant acide à l'anthrapyridone représenté par la formule (1) ci-dessus, et dans lequel 1 ou 2 unités $SO_3M$ sont présentes dans la formule (1).

**14.** Procédé de soudage au laser selon la Revendication 12, dans lequel la résine thermoplastique de ladite composition de résine thermoplastique colorée transmettant un faisceau laser est une résine polyamide, une résine polyester, ou une résine polyoléfine.

**15.** Procédé de soudage au laser selon la Revendication 12, dans lequel ladite composition de résine thermoplastique colorée transmettant un faisceau laser est de couleur noire car elle contient un colorant vert, ainsi que ledit colorant acide à l'anthrapyridone.

**16.** Procédé de soudage au laser selon la Revendication 12, dans lequel ladite matière transmettant un faisceau laser et ladite matière absorbant le laser sont toutes deux de couleur noire.

**17.** Procédé de soudage au laser selon la Revendication 12, dans lequel ladite matière absorbant le laser comprend une composition de résine colorée absorbant le laser incorporant au moins du noir de carbone et/ou un colorant au nigrosine comme colorant.

**18.** Utilisation d'un colorant acide à l'anthrapyridone représenté par la formule (1) ou (3) ci-dessous, comme colorant pour colorer une composition de résine thermoplastique transmettant un faisceau laser qui forme une matière transmettant un faisceau laser, utilisée pour le soudage au laser, ledit colorant étant incorporé dans ladite résine thermoplastique :

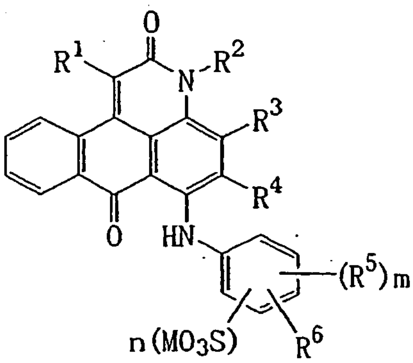

Dans la formule (1),

$R^1$ représente l'hydrogène, un groupe alkyle avec ou sans substituant, un groupe alkylecarbonyle avec ou sans substituant, un groupe arylecarbonyle avec ou sans substituant sur le cycle, ou un groupe alkoxycarbonyle avec ou sans substituant,
$R^2$ représente l'hydrogène, un groupe alkyle, un groupe aryle avec ou sans substituant sur le cycle, un groupe alkoxy, un groupe amino, un groupe hydroxyle, ou un halogène,
$R^3$ représente un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, $SO_3M$, un groupe alkoxycarbonyle, un groupe cyclohexylamide, ou un groupe représenté par la formule (2) ;

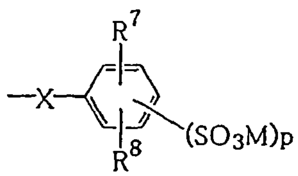

Dans la formule (2),

X représente O, S ou NH,
$R^7$ et $R^8$ représentent chacun indépendamment un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, un groupe alkoxycarbonyle ou un groupe cyclohexylamide,
p représente 0 ou 1
M représente l'hydrogène, un métal alcalin, ou de l'ammonium ;
$R^4$ à $R^6$ représentent chacun indépendamment l'hydrogène, un groupe alkyle, un groupe alkoxyle, un halogène ou un groupe hydroxyle,
M représente l'hydrogène, un métal alcalin, ou de l'ammonium,
m et n représentent chacun indépendamment 1, 2 ou 3.
dans la mesure où une pluralité d'unités $R^5$ sont présentes, elles peuvent être identiques ou non ;
dans la mesure où une pluralité d'unités $SO_3M$ sont présentes, y compris $SO_3M$ dans la formule (2), les unités M dans celle-ci peuvent être identiques ou non ; ]

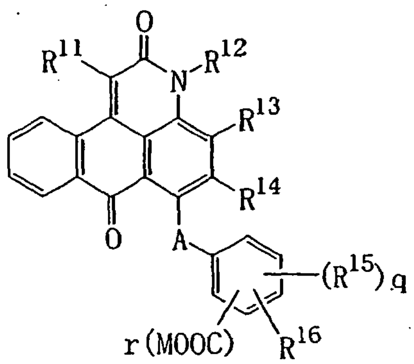

Dans la formule (3),

$R^{11}$ représente l'hydrogène, un groupe alkyle avec ou sans substituant, un groupe alkylecarbonyle avec ou sans substituant, un groupe arylecarbonyle avec ou sans substituant sur le cycle, ou un groupe alkoxycarbonyle avec ou sans substituant,
$R^{12}$ représente l'hydrogène, un groupe alkyle, un groupe aryle avec ou sans substituant sur le cycle, un groupe alkoxy, un groupe amino, un groupe hydroxyle, ou un halogène,
$R^{13}$ représente un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, $SO_3M$, un groupe alkoxycarbonyle, un groupe cyclohexylamide, ou un groupe représenté par la formule (4) ;

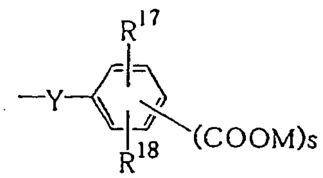

Dans la formule (4)

Y représente O, S ou NH,
$R^{17}$ et $R^{18}$ représentent chacun indépendamment un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, un groupe alkoxycarbonyle ou un groupe cyclohexylamide,
s représente 0, 1 ou 2
M représente l'hydrogène, un métal alcalin, ou de l'ammonium ;
$R^{14}$ à $R^{16}$ représentent chacun indépendamment l'hydrogène, un groupe alkyle, un groupe alkoxyle, un halogène ou un groupe hydroxyle,
A représente O, S ou NH,
M représente l'hydrogène, un métal alcalin, ou de l'ammonium,
q représente 1, 2 ou 3,
r représente 0, 1, 2 ou 3.
dans la mesure où une pluralité d'unités $R^{15}$ sont présentes elles peuvent être identiques ou non ;
une ou plusieurs unités COOM sont présentes dans la formule (3) ;
dans la mesure où une pluralité d'unités COOM sont présentes, y compris COOM dans la formule (4), les unités M de celle-ci peuvent être identiques ou non.

**19.** Utilisation de la Revendication 18, dans laquelle ledit colorant acide à l'anthrapyridone est représenté par la formule (1) comprenant 1 ou 2 $SO_3M$.

**20.** Utilisation de la Revendication 18, dans laquelle ledit colorant acide à l'anthrapyridone est représenté par la formule (3) comprenant de 1 à 3 COOM, dans la formule (3) r étant 1 ou 2.

**21.** Utilisation de la Revendication 18, dans laquelle ladite résine thermoplastique est une résine polyamide, une résine polyester, ou une résine polyoléfine.

**22.** Utilisation de la Revendication 18, dans laquelle le facteur de transmission de ladite composition de résine thermoplastique transmettant un faisceau laser, colorée avec ledit colorant acide à l'anthrapyridone à une longueur d'onde d'oscillation du laser pour le soudage de la résine n'est pas inférieure à 20 %.

**23.** Utilisation de la Revendication 18, dans laquelle ladite composition de résine thermoplastique transmettant un faisceau laser contient de la fibre de verre de renforcement à entre 10 et 60 % en poids.

**24.** Utilisation d'une composition de résine thermoplastique colorée transmettant un faisceau laser, pour former la matière transmettant un faisceau laser utilisée dans le soudage au laser, ladite composition contenant un colorant acide à l'anthrapyridone représenté par la formule (1) ou (3) ci-dessous :

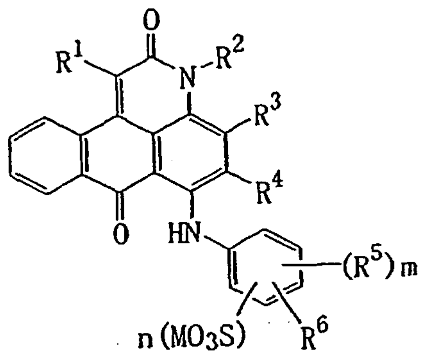

Dans la formule (1),

$R^1$ représente l'hydrogène, un groupe alkyle avec ou sans substituant, un groupe alkylecarbonyle avec ou sans substituant, un groupe arylecarbonyle avec ou sans substituant sur le cycle, ou un groupe alkoxycarbonyle avec ou sans substituant,
$R^2$ représente l'hydrogène, un groupe alkyle, un groupe aryle avec ou sans substituant sur le cycle, un groupe alkoxy, un groupe amino, un groupe hydroxyle, ou un halogène,
$R^3$ représente un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, $SO_3M$, un groupe alkoxycarbonyle, un groupe cyclohexylamide, ou un groupe représenté par la formule (2) ;

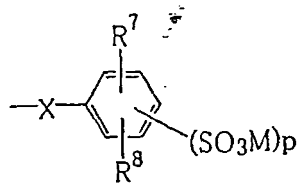

Dans la formule (2),

X représente O, S ou NH,
$R^7$ et $R^8$ représentent chacun indépendamment un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, un groupe alkoxycarbonyle ou un groupe cyclohexylamide,
p représente 0 ou 1
M représente l'hydrogène, un métal alcalin, ou de l'ammonium ;
$R^4$ à $R^6$ représentent chacun indépendamment l'hydrogène, un groupe alkyle, un groupe alkoxyle, un halogène ou un groupe hydroxyle,
M représente l'hydrogène, un métal alcalin, ou de l'ammonium,
m et n représentent chacun indépendamment 1, 2 ou 3.
dans la mesure où une pluralité d'unités $R^5$ sont présentes, elles peuvent être identiques ou non ;
dans la mesure où une pluralité d'unités $SO_3M$ sont présentes, y compris $SO_3M$ dans la formule (2), les unités M dans celle-ci peuvent être identiques ou non ; ]

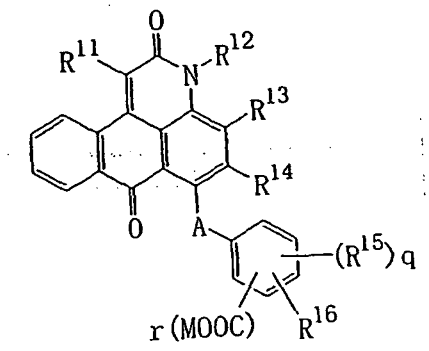

Dans la formule (3),

$R^{11}$ représente l'hydrogène, un groupe alkyle avec ou sans substituant, un groupe alkylecarbonyle avec ou sans substituant, un groupe arylecarbonyle avec ou sans substituant sur le cycle, ou un groupe alkoxycarbonyle avec ou sans substituant,

$R^{12}$ représente l'hydrogène, un groupe alkyle, un groupe aryle avec ou sans substituant sur le cycle, un groupe alkoxy, un groupe amino, un groupe hydroxyle, ou un halogène,

$R^{13}$ représente un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, $SO_3M$, un groupe alkoxycarbonyle, un groupe cyclohexylamide, ou un groupe représenté par la formule (4) ;

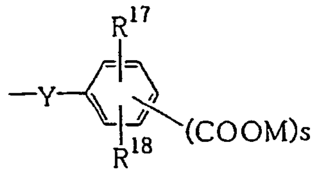

Dans la formule (4)

Y représente O, S ou NH,

$R^{17}$ et $R^{18}$ représentent chacun indépendamment un hydrogène, un groupe alkyle, un groupe aryle avec ou sans substituant sur le cycle, un groupe alkenyle, un groupe alkoxy, un groupe amino, un groupe hydroxyle, un halogène, un groupe acyle, un groupe acyloxy, un groupe acylamide, un groupe acyl-N-alkylamide, COOM, un groupe alkoxycarbonyle ou un groupe cyclohexylamide,

s représente 0, 1 ou 2

M représente l'hydrogène, un métal alcalin, ou de l'ammonium ;

$R^{14}$ à $R^{16}$ représentent chacun indépendamment l'hydrogène, un groupe alkyle, un groupe alkoxyle, un halogène ou un groupe hydroxyle,

A représente O, S ou NH,

M représente l'hydrogène, un métal alcalin, ou de l'ammonium,

q représente 1, 2 ou 3,

r représente 0, 1, 2 ou 3.

dans la mesure où une pluralité d'unités $R^{15}$ sont présentes elles peuvent être identiques ou non ;

une ou plusieurs unités COOM sont présentes dans la formule (3) ;

dans la mesure où une pluralité d'unités COOM sont présentes, y compris COOM dans la formule (4), les unités M de celle-ci peuvent être identiques ou non.

FIG. 1

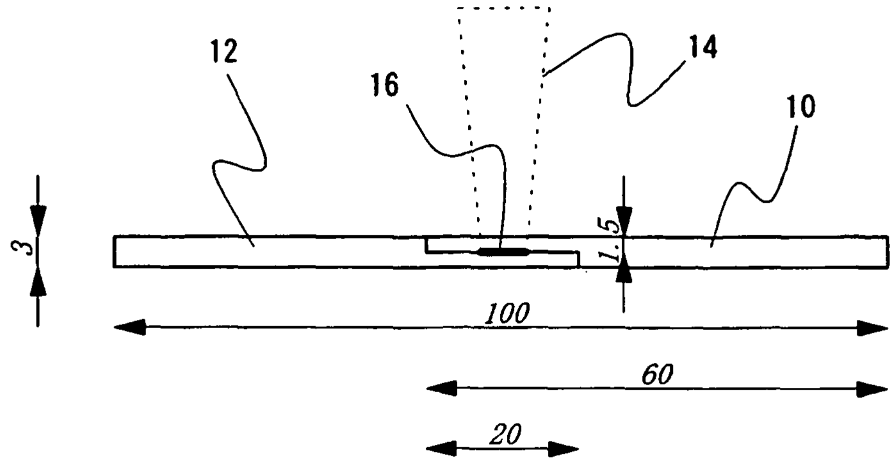


FIG. 2

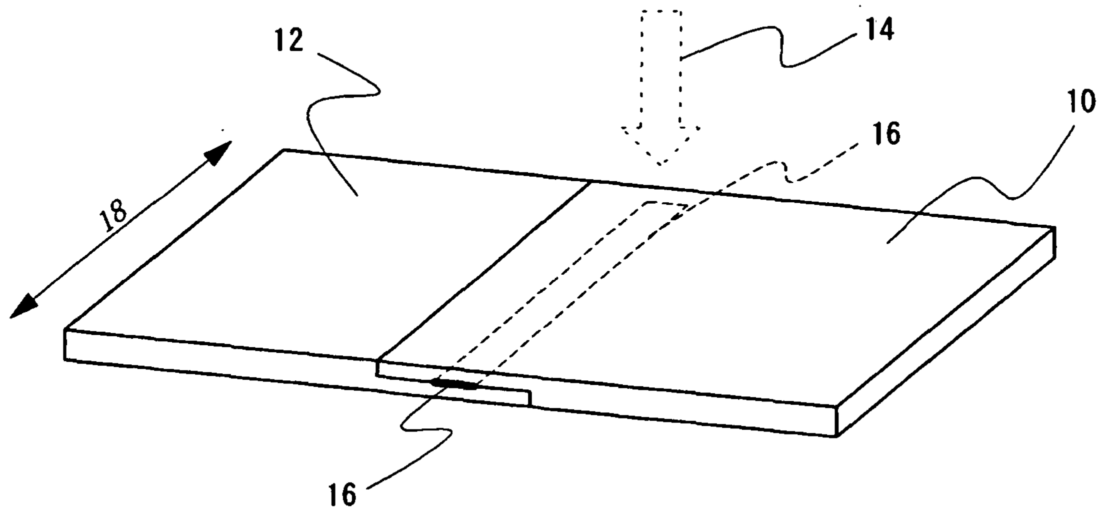

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11170371 A
- JP 2002228830 A
- JP 2002228831 A